# EUROPEAN PATENT APPLICATION

(11) **EP 4 808 169 A1**
(43) Date of publication of application: **16.09.2026**
(21) Application number: 24893305.3
(22) Date of filing: 12.11.2024
(51) Int. Cl.: H04W 4/30

(54) **COMMUNICATION METHOD AND APPARATUS**

(30) Priority: 25.11.2023 CN 202311600638
(71) Applicant: Huawei Technologies Co., Ltd., Shenzhen, Guangdong 518129 (CN)
(72) Inventor: ZHENG, Xiaochun, Shenzhen, Guangdong 518129 (CN); LIAO, Ting, Shenzhen, Guangdong 518129 (CN); ZONG, Zaifeng, Shenzhen, Guangdong 518129 (CN)
(74) Representative: Maiwald GmbH
(86) International application number: PCT/CN2024/131646
(87) International publication number: WO 2025/108147

(57) **Abstract**

This application provides a communication method and apparatus to improve the efficiency of tag inventorying. The method includes: A first tag management function network element sends a first message to a first tag through an access network device, where the first message includes an identifier of the first tag management function network element, and the first tag is a tag registered with the first tag management function network element; and the first tag management function network element receives a second message from the first tag through the access network device, where the second message includes service data of the first tag, an identifier of the first tag, and the identifier of the first tag management function network element.

## Description

### CROSS-REFERENCE TO RELATED APPLICATIONS

This application claims priority to Chinese Patent Application No. 202311600638.4, filed with the China National Intellectual Property Administration on November 25, 2023 and entitled "COMMUNICATION METHOD AND APPARATUS", which is incorporated herein by reference in its entirety.

### TECHNICAL FIELD

This application relates to the field of communication technologies, and in particular, to a communication method and apparatus.

### BACKGROUND

Currently, in passive internet of things (Passive IoT) scenarios, IoT terminal devices, namely, tags, have broad prospects for large-scale deployment and application. For example, in logistics and warehousing scenarios, tags may be used for inventorying and tracking goods, and for monitoring the environment and status of high-value goods (for example, vaccines) during transportation. For another example, in industrial manufacturing scenarios, tags can be used for environment and device status monitoring.

Tags have simple functions and generally rely on external excitation to transmit information. The excitation is typically from a reader/writer. Some tags can collect and store weak environmental energy (such as light energy and mechanical energy) or have built-in miniature batteries for their own operation, thereby communicating with the reader/writer. The reader/writer may be integrated into an access network device, which reads the tags based on instructions from a core network element.

In existing technologies, an efficient tag inventorying method is urgently needed.

### SUMMARY

This application provides a communication method and apparatus to improve the efficiency of tag inventorying.

According to a first aspect, an embodiment of this application provides a communication method, including: A first tag management function network element sends a first message to a first tag through an access network device, where the first message includes an identifier of the first tag management function network element, and the first tag is a tag registered with the first tag management function network element; and the first tag management function network element receives a second message from the first tag through the access network device, where the second message includes service data of the first tag, an identifier of the first tag, and the identifier of the first tag management function network element.

In the foregoing design, the tag actively sends data based on the identifier of the tag management function network element, and a reader/writer does not need to perform a read operation on the tag, thereby improving the efficiency of tag inventorying.

In a possible design, the first message further includes information indicating the first tag to send the service data. In view of this, the first tag may send the service data after receiving the first message.

In a possible design, before sending the first message to the first tag through the access network device, the first tag management function network element receives a third message from a first network element, where the third message is used for requesting the service data of the first tag, the third message includes the identifier of the first tag and information about the first network element, and the information about the first network element is used for determining that the first network element has permission to access the first tag. After receiving the second message from the first tag through the access network device, the first tag management function network element may further send the second message of the first tag to the first network element. In such a design, the first network element may be an application function network element, and the tag management function network element may forward the service data of the tag to the application function network element having permission to access the tag, to complete an inventory operation on the tag.

In a possible design, the first message further includes data sending periodicity information of the first tag. In view of this, the first tag may periodically send the service data based on the first message. Correspondingly, the first tag management function network element may receive a plurality of second messages from the first tag through the access network device based on the data sending periodicity information of the first tag.

In a possible design, after receiving the plurality of second messages from the first tag through the access network device, the first tag management function network element receives a third message from a first network element, where the third message is used for requesting the service data of the first tag, the third message includes the identifier of the first tag and information about the first network element, and the information about the first network element is used for determining that the first network element has permission to access the first tag; and then the first tag management function network element sends a fourth message to the first network element, where the fourth message includes the identifier of the first tag and the service data of the first tag from the plurality of second messages. In such a design, the first tag management function network element may uniformly send the received plurality of pieces of service data of the tag to the corresponding first network element (for example, the application function network element), so that signaling overheads can be reduced.

In a possible design, before receiving the second message from the first tag through the access network device, the first tag management function network element obtains subscription information of the first tag from a second network element, where the subscription information of the first tag includes one or more of the following: access permission information corresponding to the first tag, where the access permission information indicates a network element having permission to access the first tag; the data sending periodicity information of the first tag; and service data cache information of the first tag, where the data cache information indicates a time point for caching and/or deleting the service data of the first tag in the first tag management function network element. Such a design helps the first tag management function network element quickly determine whether the first network element has permission to access the first tag.

In a possible design, before obtaining the subscription information of the first tag from the second network element, the first tag management function network element sends a fifth message to the second network element, where the fifth message indicates a mapping relationship between the first tag and the first tag management function network element.

According to a second aspect, an embodiment of this application provides a communication method, including: After a first tag is registered with a first tag management function network element, the first tag receives a first message from the first tag management function network element through an access network device, where the first message includes an identifier of the first tag management function network element; and the first tag sends a second message to the access network device through the access network device, where the second message includes service data of the first tag, an identifier of the first tag, and the identifier of the first tag management function network element.

In a possible design, a procedure according to which the first tag is registered with the first tag management function network element includes: The first tag determines to-be-sent data, and establishes a communication connection with the access network device in a random access manner; and then the first tag registers the first tag with the first tag management function network element through the access network device.

In a possible design, the first message further includes information indicating the first tag to send data.

In a possible design, the first message further includes data sending periodicity information of the first tag; and that the access network device sends the second message to the access network device includes: sending a plurality of second messages through the access network device based on the data sending periodicity information of the first tag.

According to a third aspect, an embodiment of this application provides a communication method, including: A first network element determines that a current location of a first tag is within a service range of a first tag management function network element; the first network element sends a third message to the first tag management function network element, where the third message is used for requesting service data of the first tag, the third message includes an identifier of the first tag and information about the first tag management function network element, and the information about the first tag management function network element is used for determining that the first tag management function network element has permission to access the first tag; and the first network element receives one or more second messages of the first tag from the first tag management function network element, where the second message includes the service data of the first tag, the identifier of the first tag, and an identifier of the first tag management function network element.

In such a design, based on a relationship between the location of the tag and the service range of the tag management function network element, the first network element may request the service data of the first tag from the first tag management function network element corresponding to the first tag.

According to a fourth aspect, an embodiment of this application provides a communication method, applied to a first tag, where the first tag is a tag registered with a first tag management function network element, and the method includes: When a location of the first tag changes from a service range of the first tag management function network element to a service range of a second tag management function network element, the first tag sends a second message to the second tag management function network element through an access network device, where the second message includes service data of the first tag and an identifier of the first tag management function network element; and the first tag receives a sixth message from the second tag management function network element through the access network device, where the sixth message includes an identifier of the second tag management function network element; and sends a seventh message to the second tag management function network element through the access network device, where the seventh message includes the service data of the first tag and the identifier of the second tag management function network element.

Such a design may be applied to a scenario in which the tag moves, and switching between tag management function network elements is quickly completed based on configurations of identifiers of the tag management function network elements, to ensure normal transmission of service data.

In a possible design, the first tag may determine to-be-sent data, and establish a communication connection with the access network device in a random access manner; and then send the second message to the second tag management function network element through the access network device.

According to a fifth aspect, an embodiment of this application provides a communication method, applied to a second tag management function network element, and including: receiving a second message from a first tag through an access network device, where the second message includes service data of the first tag and an identifier of a first tag management function network element, and the first tag is a tag registered with the first tag management function network element; obtaining, based on the identifier of the first tag management function network element, context information of the first tag from the first tag management function network element; sending a sixth message to the first tag through the access network device, where the sixth message includes an identifier of the second tag management function network element; and receiving a seventh message from the first tag through the access network device, where the seventh message includes the service data of the first tag and the identifier of the second tag management function network element.

Such a design may be applied to a scenario in which the tag moves, and switching between tag management function network elements is quickly completed based on configurations of identifiers of the tag management function network elements, to ensure normal transmission of service data.

According to a sixth aspect, an embodiment of this application provides a communication apparatus. The apparatus may be configured to perform the method according to the first aspect. The apparatus may be a first tag management function network element, a component (for example, a chip, a chip system, or a circuit) in the first tag management function network element, or an apparatus used in conjunction with the first tag management function network element.

In a possible implementation, the communication apparatus may include modules or units that perform the corresponding methods/operations/steps/actions described in the first aspect. The modules or units may be implemented by a hardware circuit, software, or a combination of a hardware circuit and software. In a possible implementation, the apparatus may include a processing unit (which may also be referred to as a processing module) and a communication unit (which may also be referred to as a communication module). The communication unit may be configured to perform a receiving and/or sending function, and the processing unit may be configured to perform the method according to any one of the first aspect or the possible implementations of the first aspect.

The communication unit is configured to send a first message to a first tag through the first tag management function network element under control of the processing unit, where the first message includes an identifier of the first tag management function network element, and the first tag is a tag registered with the first tag management function network element.

The communication unit is further configured to receive a second message from the first tag through the first tag management function network element, where the second message includes service data of the first tag, an identifier of the first tag, and the identifier of the first tag management function network element.

In a possible design, the first message further includes information indicating the first tag to send the service data.

In a possible design, the communication unit is further configured to: before sending the first message to the first tag through an access network device, receive a third message from a first network element, where the third message is used for requesting the service data of the first tag, the third message includes the identifier of the first tag and information about the first network element, and the information about the first network element is used for determining that the first network element has permission to access the first tag. The communication unit is further configured to: after receiving the second message from the first tag through the access network device, send the second message of the first tag to the first network element.

In a possible design, the first message further includes data sending periodicity information of the first tag. In view of this, the first tag may periodically send the service data based on the first message. Correspondingly, the first tag management function network element may receive a plurality of second messages from the first tag through the access network device based on the data sending periodicity information of the first tag.

In a possible design, the communication unit is further configured to: after receiving a plurality of second messages from the first tag through the access network device, receive a third message from a first network element, where the third message is used for requesting the service data of the first tag, the third message includes the identifier of the first tag and information about the first network element, and the information about the first network element is used for determining that the first network element has permission to access the first tag. The communication unit is further configured to send a fourth message to the first network element under control of the processing unit, where the fourth message includes the identifier of the first tag and the service data of the first tag from the plurality of second messages.

In a possible design, the communication unit is further configured to: before receiving the second message from the first tag through the access network device, obtain subscription information of the first tag from a second network element, where the subscription information of the first tag includes one or more of the following: access permission information corresponding to the first tag, where the access permission information indicates a network element having permission to access the first tag; the data sending periodicity information of the first tag; and service data cache information of the first tag, where the data cache information indicates a time point for caching and/or deleting the service data of the first tag in the first tag management function network element.

In a possible design, the communication unit is further configured to: before obtaining the subscription information of the first tag from the second network element, send a fifth message to the second network element, where the fifth message indicates a mapping relationship between the first tag and the first tag management function network element.

According to a seventh aspect, an embodiment of this application further provides a communication apparatus. The apparatus may be configured to perform the method according to the second aspect. The apparatus may be a first tag, a component (for example, a chip, a chip system, or a circuit) in the first tag, or an apparatus used in conjunction with the first tag.

In a possible implementation, the communication apparatus may include modules or units that are in one-to-one correspondence with the methods/operations/steps/actions described in the second aspect. The modules or units may be implemented by a hardware circuit, software, or a combination of a hardware circuit and software. In a possible implementation, the apparatus may include a processing unit (which may also be referred to as a processing module) and a communication unit (which may also be referred to as a communication module). The communication unit may be configured to perform a receiving and/or sending function, and the processing unit may be configured to perform the method according to any one of the second aspect or the possible implementations of the second aspect.

The communication unit is configured to: after the first tag is registered with a first tag management function network element, receive a first message from the first tag management function network element through an access network device, where the first message includes an identifier of the first tag management function network element.

The communication unit is further configured to send a second message to the access network device through the access network device under control of the processing unit, where the second message includes the service data of the first tag, an identifier of the first tag, and an identifier of the first tag management function network element.

In a possible design, the processing unit is further configured to determine to-be-sent data; the communication unit is further configured to establish a communication connection with the access network device in a random access manner; and the processing unit is further configured to register the first tag with the first tag management function network element through the access network device.

In a possible design, the first message further includes information indicating the first tag to send data.

In a possible design, the first message further includes data sending periodicity information of the first tag; and the communication unit is specifically configured to send a plurality of second messages through the access network device based on the data sending periodicity information of the first tag.

According to an eighth aspect, an embodiment of this application further provides a communication apparatus. The apparatus may be configured to perform the method according to the third aspect. The apparatus may be a first network element, a component (for example, a chip, a chip system, or a circuit) in the first network element, or an apparatus used in conjunction with the first network element.

In a possible implementation, the communication apparatus may include modules or units that are in one-to-one correspondence with the methods/operations/steps/actions described in the third aspect. The modules or units may be implemented by a hardware circuit, software, or a combination of a hardware circuit and software. In a possible implementation, the apparatus may include a processing unit (which may also be referred to as a processing module) and a communication unit (which may also be referred to as a communication module). The communication unit may be configured to perform a receiving and/or sending function, and the processing unit may be configured to perform the method according to any one of the third aspect or the possible implementations of the third aspect.

The processing unit is configured to determine that a current location of a first tag is within a service range of a first tag management function network element.

The communication unit is configured to send a third message to the first tag management function network element, where the third message is used for requesting service data of the first tag, the third message includes an identifier of the first tag and information about the first tag management function network element, and the information about the first tag management function network element is used for determining that the first tag management function network element has permission to access the first tag.

The communication unit is further configured to receive one or more second messages of the first tag from the first tag management function network element, where the second message includes the service data of the first tag, the identifier of the first tag, and an identifier of the first tag management function network element.

According to a ninth aspect, an embodiment of this application further provides a communication apparatus. The apparatus may be configured to perform the method according to the fourth aspect. The apparatus may be a first tag, a component (for example, a chip, a chip system, or a circuit) in the first tag, or an apparatus used in conjunction with the first tag. The first tag is a tag registered with a first tag management function network element.

In a possible implementation, the communication apparatus may include modules or units that perform the corresponding methods/operations/steps/actions described in the fourth aspect. The modules or units may be implemented by a hardware circuit, software, or a combination of a hardware circuit and software. In a possible implementation, the apparatus may include a processing unit (which may also be referred to as a processing module) and a communication unit (which may also be referred to as a communication module). The communication unit may be configured to perform a receiving and/or sending function, and the processing unit may be configured to perform the method according to any one of the fourth aspect or the possible implementations of the fourth aspect.

When a location of the first tag changes from a service range of the first tag management function network element to a service range of a second tag management function network element, the communication unit is configured to send a second message to the second tag management function network element through an access network device under control of the processing unit, where the second message includes service data of the first tag and an identifier of the first tag management function network element.

The communication unit is further configured to receive a sixth message from the second tag management function network element through the access network device, where the sixth message includes an identifier of the second tag management function network element; and send a seventh message to the second tag management function network element through the access network device, where the seventh message includes the service data of the first tag and the identifier of the second tag management function network element.

In a possible design, the processing unit is further configured to determine to-be-sent data, and establish a communication connection with the access network device in a random access manner; and the communication unit is further configured to send the second message to the second tag management function network element through the access network device.

According to a tenth aspect, an embodiment of this application provides a communication apparatus. The apparatus may be configured to perform the method according to the fifth aspect. The apparatus may be a second tag management function network element, a component (for example, a chip, a chip system, or a circuit) in the second tag management function network element, or an apparatus used in conjunction with the second tag management function network element. A second tag management function network element is a tag registered with the second tag management function network element.

In a possible implementation, the communication apparatus may include modules or units that are in one-to-one correspondence with the methods/operations/steps/actions described in the fifth aspect. The modules or units may be implemented by a hardware circuit, software, or a combination of a hardware circuit and software. In a possible implementation, the apparatus may include a processing unit (which may also be referred to as a processing module) and a communication unit (which may also be referred to as a communication module). The communication unit may be configured to perform a receiving and/or sending function, and the processing unit may be configured to perform the method according to any one of the fifth aspect or the possible implementations of the fifth aspect.

The communication unit is configured to receive a second message from a first tag through an access network device, where the second message includes service data of the first tag and an identifier of a first tag management function network element, and the first tag is a tag registered with the first tag management function network element.

The processing unit is configured to obtain, based on the identifier of the first tag management function network element, context information of the first tag from the first tag management function network element.

The communication unit is further configured to send a sixth message to the first tag through the access network device, where the sixth message includes an identifier of the second tag management function network element; and receive a seventh message from the first tag through the access network device, where the seventh message includes the service data of the first tag and the identifier of the second tag management function network element.

According to an eleventh aspect, an embodiment of this application provides a communication apparatus. The communication apparatus includes a processor, configured to implement the method described in any one of the first aspect to the fifth aspect. The processor is coupled to a memory, and the memory is configured to store instructions and data. When executing the instructions stored in the memory, the processor may implement the method described in the first aspect. Optionally, the communication apparatus may further include the memory. The communication apparatus may further include a communication interface. The communication interface is used by the communication apparatus to communicate with another device. For example, the communication interface may be a transceiver, a circuit, a bus, a module, a pin, or a communication interface of another type.

According to a twelfth aspect, an embodiment of this application provides a communication apparatus, including a logic circuit and an interface circuit. The interface circuit is configured to communicate with a module other than the communication apparatus, and the logic circuit is configured to execute a computer program, to cause the communication apparatus to perform the method according to any one of the first aspect to the fifth aspect.

According to a thirteenth aspect, an embodiment of this application further provides a computer program. When the computer program is run on a computer, the computer is caused to perform the method according to any one of the first aspect to the fifth aspect.

According to a fourteenth aspect, an embodiment of this application further provides a computer program product, including instructions. When the instructions are run on a computer, the computer is caused to perform the method according to any one of the first aspect to the fifth aspect.

According to a fifteenth aspect, an embodiment of this application further provides a computer-readable storage medium. The computer-readable storage medium stores a computer program or instructions. When the computer program or the instructions are run on a computer, the computer is caused to perform the method according to any one of the first aspect to the fifth aspect.

According to a sixteenth aspect, an embodiment of this application further provides a chip. The chip is configured to read a computer program stored in a memory, to perform the method according to any one of the first aspect to the fifth aspect.

According to a seventeenth aspect, an embodiment of this application further provides a chip system. The chip system includes a processor, configured to support a computer apparatus in implementing the method according to any one of the first aspect to the fifth aspect. In a possible design, the chip system further includes a memory, and the memory is configured to store a program and data that are necessary for the computer apparatus. The chip system may include a chip, or may include a chip and another discrete component.

For effect of the solutions provided in any one of the second aspect to the seventeenth aspect, refer to the corresponding descriptions in the first aspect.

### BRIEF DESCRIPTION OF DRAWINGS

FIG. 1 is a diagram of an architecture of a communication system;
FIG. 2 is a diagram of an architecture of another communication system;
FIG. 3 to FIG. 10B are schematic flowcharts of several communication methods according to embodiments of this application;
FIG. 11 is a diagram of a structure of a communication apparatus according to an embodiment of this application; and
FIG. 12 is a diagram of a structure of a communication apparatus according to an embodiment of this application.

### DESCRIPTION OF EMBODIMENTS

To make objectives, technical solutions, and advantages of embodiments of this application clearer, the following further describes embodiments of this application in detail with reference to accompanying drawings.

At least one (item) in embodiments of this application indicates one or more (items). A plurality of (items) means two (items) or more than two (items). The term "and/or" describes an association relationship for describing associated objects and represents that three relationships may exist. For example, A and/or B may represent the following three cases: Only A exists, both A and B exist, and only B exists. The character "/" generally indicates an "or" relationship between the associated objects. In addition, it should be understood that although terms such as first and second may be used in embodiments of this application to describe objects, these objects should not be limited by these terms. These terms are merely used for distinguishing the objects from each other.

The terms "including", "having", and any variants thereof in the following descriptions of embodiments of this application are intended to cover a non-exclusive inclusion. For example, a process, a method, a system, a product, or a device that includes a series of steps or units is not limited to the listed steps or units, but optionally further includes other unlisted steps or units, or optionally further includes another inherent step or unit of the process, the method, the product, or the device. It should be noted that, in embodiments of this application, the terms such as "example" or "for example" are used to represent giving an example, an illustration, or a description. Any method or design scheme described as an "example" or "for example" in embodiments of this application should not be explained as being more preferred or having more advantages than another method or design scheme. To be precise, use of the term like "example" or "for example" is intended to present a relative concept in a specific manner.

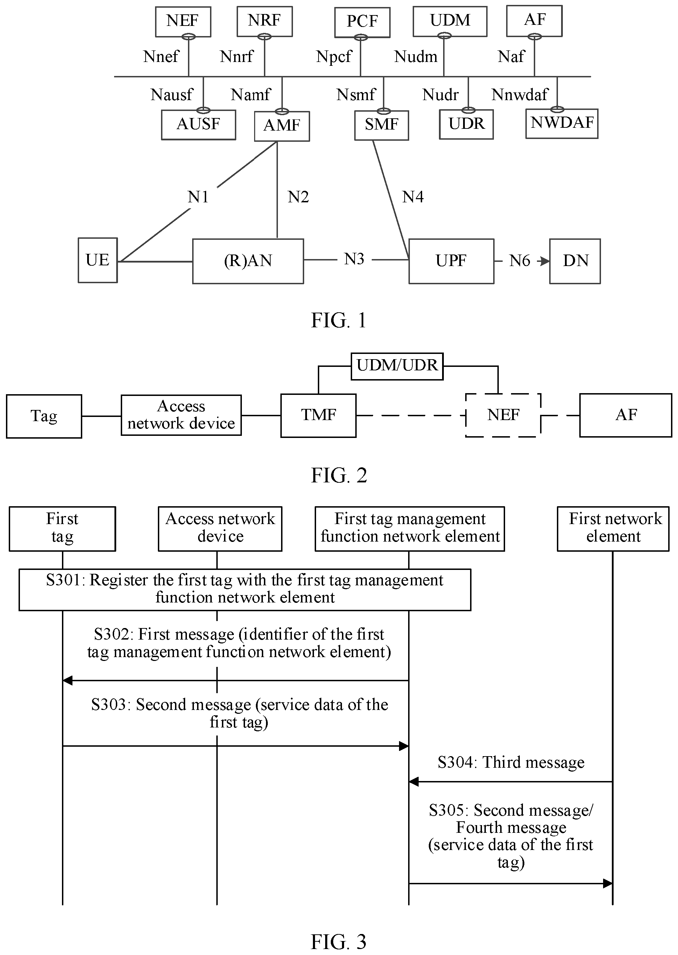

FIG. 1 is a diagram of a network architecture to which a communication method is applicable according to an embodiment of this application. As shown in FIG. 1, the network architecture may include an access network and a core network. A terminal device accesses a data network (data network, DN) through the access network and the core network.

The terminal device may be a tag, user equipment (user equipment, UE), a mobile station, a mobile terminal, an application client, or the like. The terminal device may be widely used in various scenarios, for example, device-to-device (device-to-device, D2D), vehicle to everything (vehicle to everything, V2X) communication, machine-type communication (machine-type communication, MTC), internet of things (internet of things, IoT), virtual reality, augmented reality, industrial control, self-driving, telemedicine, a smart grid, smart furniture, a smart office, smart wearable, smart transportation, and a smart city. The terminal device may be a mobile phone, a tablet computer, a computer having a wireless transceiver function, a wearable device, a vehicle, an urban air transportation vehicle (like an uncrewed aerial vehicle or a helicopter), a ship, a robot, a mechanical arm, a smart home device, or the like.

In this application, an apparatus configured to implement a function of a terminal device may be a terminal device, or may be an apparatus, for example, a chip system, that can support the terminal device in implementing the function, and the apparatus may be installed in the terminal device. In this application, the chip system may include a chip, or may include a chip and another discrete device. In the technical solutions provided in this application, an example in which the apparatus configured to implement a function of a tag is a terminal device is used to describe the technical solutions provided in embodiments of this application.

The access network is configured to implement an access-related function, may provide a network access function for an authorized user in a specific area, and can determine transmission links with different quality based on a user level, a service requirement, and the like, to transmit user data. The access network forwards a control signal and user data between the UE and the core network. The access network may include an access network device. The access network device may be a device that provides access for the UE, and may include a radio access network (radio access network, RAN) device and a wired access network device. The RAN device is mainly responsible for functions such as radio resource management, quality of service (quality of service, QoS) management, and data compression and encryption on an air interface side. The RAN device may include base stations in various forms, for example, a macro base station, a micro base station (which may also be referred to as a small cell), a relay station, an access point, and a balloon station. In systems using different radio access technologies, names of a device having a base station function may be different. For example, in a 5G system, the device is referred to as a RAN or a next-generation node base station (next-generation Node base station, gNB). In a long term evolution (long term evolution, LTE) system, the device is referred to as an evolved NodeB (evolved NodeB, eNB or eNodeB).

In some deployments, the gNB may include a central unit (central unit, CU) and a distributed unit (distributed unit, DU). The gNB may further include an active antenna unit (active antenna unit, AAU). The CU can implement some functions of the gNB, and the DU can implement other functions of the gNB. For example, the CU is responsible for processing a non-real-time protocol and service, and implements functions of a radio resource control (radio resource control, RRC) layer and a packet data convergence protocol (packet data convergence protocol, PDCP) layer. The DU is responsible for processing a physical layer protocol and a real-time service, and implements functions of a radio link control (radio link control, RLC) layer, a media access control (media access control, MAC) layer, and a physical (physical, PHY) layer. The AAU implements some physical layer processing functions, radio frequency processing, and a function related to an active antenna. Information at the RRC layer is generated by the CU, and is finally encapsulated at the PHY layer of the DU into information at the PHY layer, or is transformed from information at the PHY layer. Therefore, in this architecture, higher-layer signaling, for example, RRC layer signaling, may also be considered to be sent by the DU, or sent by the DU and the AAU. It may be understood that the access network device may include one or more of a CU node, a DU node, or an AAU node. In addition, the CU may be classified as an access network device in an access network, or the CU may be classified as an access network device in a CN. This is not limited in this application.

The access network device and the terminal device may be at fixed locations, or may be movable. The access network device and the terminal device may be deployed terrestrially, including an indoor device or an outdoor device, a handheld device, or a vehicle-mounted device; or may be deployed on the water; or may be deployed on an airplane, a balloon, and an artificial satellite in the air. Application scenarios of the access network device and the terminal device are not limited in embodiments of this application.

The core network is responsible for maintaining subscription data of a mobile network, and provides session management, mobility management, policy management, security authentication, and another function for the UE. The core network includes but is not limited to one or more of the following network elements: an application function (application function, AF) network element, a unified data management (unified data management, UDM) network element, a unified data repository (unified data repository, UDR) network element, a policy control function (policy control function, PCF) network element, a session management function (session management function, SMF) network element, an access and mobility management function (access and mobility management function, AMF) network element, a network repository function (network repository function, NRF) network element, an authentication server function (authentication server function, AUSF) network element, a network exposure function (network exposure function, NEF) network element, a user plane function (user plane function, UPF) network element, and a network data analytics function network element (Network Data Analytics Function, NWDAF) network element.

The access and mobility management function network element is mainly responsible for mobility management in a mobile network, for example, user location update, user registration with a network, user handover, allocation of a temporary user identity, and user authentication and authorization. In 5G, the access and mobility management function network element may be the AMF network element. In future communication, for example, in the 6th generation (the 6th generation, 6G), the mobility management network element may still be the AMF network element, or may have another name. This is not limited in this application.

The session management network element is responsible for managing a protocol data unit (protocol data unit, PDU) session of the terminal device. The PDU session is a channel used for transmitting a PDU, and the terminal device and the DN need to transmit PDUs to each other through the PDU session. The SMF network element is responsible for establishment, maintenance, deletion, and the like of the PDU session. The session management network element includes session-related functions such as session management (for example, session establishment, modification, and release, including tunnel maintenance between a user plane network element and the access network device), selection and control of the user plane network element, service and session continuity (service and session continuity, SSC) mode selection, and roaming. In 5G, the session management network element may be the SMF network element. In future communication such as 6G, the session management network element may still be the SMF network element, or may have another name. This is not limited in this application.

The user plane function network element is a gateway for communication between a mobile network and a data network (data network, DN), and is mainly responsible for forwarding and receiving user data. For example, the user plane function network element may receive the user data from the data network, and transmit the user data to the UE through the access network device; or may receive the user data from the UE through the access network device, and forward the user data to the data network. In addition, the user plane function network element further includes user plane-related functions such as data packet detection, service usage reporting, quality of service (Quality of Service, QoS) processing, lawful interception, uplink data packet detection, and downlink data packet storage. In 5G, the user plane function network element may be the UPF network element. In future communication such as 6G, the user plane function network element may still be the UPF network element, or may have another name. This is not limited in this application.

The unified data management network element is responsible for storing information such as a subscriber permanent identifier (subscriber permanent identifier, SUPI), a credential (credential), a security context (security context), and subscription data of a subscriber. The information stored in the unified data management network element may be used for authentication and authorization for accessing the mobile network by the terminal device. The foregoing subscriber may be specifically a user using a service provided by the mobile network, for example, a user using a SIM card of China Telecom or a user using a SIM card of China Mobile. The subscriber permanent identifier (subscriber Permanent Identifier, SUPI) of the subscriber may be a number of the mobile phone SIM card or the like. A credential and the security context of the subscriber may be stored small files such as an encryption key of the SIM card or information related to encryption of the SIM card, and are used for authentication and/or authorization. The security context may be cookie (cookie), a token (token), or the like stored in a local terminal (for example, a mobile phone) of the user. The subscription data of the subscriber may be a supporting service of the mobile phone SIM card, for example, a traffic package or a used network of the mobile phone SIM card. It should be noted that the permanent identifier, the credential, the security context, the cookie (cookie), and the token are equivalent to information related to authentication and authorization, and are not distinguished or limited between each other for ease of description in this application document. Unless otherwise specified, the security context is used as an example for description in embodiments of this application. However, embodiments of this application are also applicable to authentication and/or authorization information described in another manner. In 5G, the unified data management network element may be a UDM network element. In future communication such as 6G, the unified data management network element may still be a UDM network element, or may have another name. This is not limited in this application.

The unified data repository network element is responsible for performing a function of accessing data of a type such as subscription data, policy data, and application data. In 5G, the unified data repository network element may be a UDR network element. In future communication such as 6G, the unified data repository network element may still be a UDR network element, or may have another name. This is not limited in this application.

The network exposure network element securely exposes an external interface of the mobile network to a third party. When the session management network element needs to communicate with a third-party network element, the network exposure network element may serve as a relay for communication between the session management network element and the third-party network element. When the network exposure network element serves as the relay, the network exposure network element may translate identifier information of a subscriber and identifier information of the third-party network element. For example, when sending a SUPI of the subscriber from the mobile network to the third party, the network exposure network element may translate the SUPI into an external identity (identity, ID) corresponding to the SUPI. On the contrary, when sending an external ID (a network element ID of the third party) to the mobile network, the network exposure network element may translate the external ID into the SUPI. In 5G, the network exposure network element may be an NEF network element. In future communication such as 6G, the network exposure network element may still be an NEF network element, or may have another name. This is not limited in this application.

The application function network element is configured to transfer a requirement of an application side for a network side, for example, a QoS requirement or a user status event subscription. The application function network element may be a third-party functional entity, or may be an operator-deployed application server, for example, an IP multimedia subsystem (IP Multimedia Subsystem, IMS) voice call service. In 5G, the application function network element may be an AF network element. In future communication such as 6G, the application function network element may still be an AF network element, or may have another name. This is not limited in this application.

The policy control network element is configured to provide a policy of the PDU session for the session management network element. The policy may include a charging-related policy, a QoS-related policy, an authorization-related policy, and the like. In 5G, the policy control network element may be a PCF network element. In future communication, for example, in 6G, the policy control network element may still be a PCF network element, or may have another name. This is not limited in this application.

The network repository function network element may be configured to: provide a network element discovery function, and provide, based on a request of another network element, network element information corresponding to a network element type. The network repository function network element further provides a network element management service, for example, network element registration, update, and deregistration, and network element status subscription and push. In 5G, the network repository function network element may be an NRF network element. In future communication such as 6G, the network repository function network element may still be an NRF network element, or may have another name. This is not limited in this application.

The authentication server function network element is responsible for authenticating the terminal device and verifying validity of the terminal device. In 5G, the authentication server function network element may be an AUSF network element. In future communication such as 6G, the authentication server function network element may still be an AUSF network element, or may have another name. This is not limited in this application.

The network data analytics function network element may provide network data collection and analytics functions based on technologies such as big data and artificial intelligence. In 5G, the network data analytics function network element may be an NWDAF network element. In future communication such as 6G, the network data analytics function network element may still be an NWDAF network element, or may have another name. This is not limited in this application.

A plurality of services may be deployed on the DN, to provide services such as a data service and/or a voice service for the terminal device. For example, the DN is a private network of a smart factory, a sensor installed in a workshop of the smart factory may be a terminal device, a control server of the sensor is deployed in the DN, and the control server may provide a service for the sensor. The sensor may communicate with the control server, to obtain instructions of the control server, transmit collected sensor data to the control server based on the instructions, and the like. For another example, the DN is an internal office network of a company, a mobile phone or a computer of an employee of the company may be a terminal device, and the mobile phone or the computer of the employee may access information, data resources, and the like in the internal office network of the company.

The AF network element, the UDM network element, the UDR network element, the PCF network element, the SMF network element, the AMF network element, the NRF network element, the AUSF network element, the NEF network element, the UPF network element, and the NWDAF network element may also be respectively referred to as an AF, a UDM, a UDR, a PCF, an SMF, an AMF, an NRF, an AUSF, an NEF, a UPF, and an NWDAF for short, as shown in FIG. 1.

In FIG. 1, Nausf, Nnef, Nnrf, Namf, Npcf, Nsmf, Nudm, Nudr, Naf, and Nnwdaf are respectively service-based interfaces provided by the AUSF, the NEF, the NRF, the AMF, the PCF, the SMF, the UDM, the UDR, the AF, and the NWDAF, and are used to invoke corresponding service-based operations. N1, N2, N3, N4, and N6 are interface sequence numbers. Meanings of these interface sequence numbers are as follows.

(1) N1 is an interface between the AMF and the terminal device, and may be configured to transfer non-access stratum (non-access stratum, NAS) signaling (for example, including a QoS rule from the AMF) and the like to the terminal device.

(2) N2 is an interface between the AMF and the access network device, and may be configured to transfer radio bearer control information from a core network side to the access network device, and the like.

(3) N3 is an interface between the access network device and the UPF, and may mainly be configured to transfer uplink and downlink user plane data between the access network device and the UPF.

(4) N4 is an interface between the SMF and the UPF, and may be configured to transfer information between a control plane and a user plane, including delivery of a forwarding rule, a QoS rule, a data statistics rule, and the like from the control plane to the user plane, and reporting of user plane information.

(5) N6 is an interface between the UPF and the DN, and is configured to transfer uplink and downlink user data flows between the UPF and the DN.

It may be understood that the foregoing network elements or functions may be network elements in a hardware device, software functions running on dedicated hardware, or virtualized functions instantiated on a platform (for example, a cloud platform). In a possible implementation method, the foregoing network elements or functions may be implemented by one device, may be implemented by a plurality of devices, or may be one functional module in one device. This is not specifically limited in embodiments of this application.

FIG. 2 is a diagram of an architecture of another communication system to which an embodiment of this application is applicable. As shown in FIG. 2, the communication system may include a tag, an access network device, a tag management function network element, a UDM, an NEF, and an AF. For specific content of a terminal device, the access network device, the UDM, the NEF, and the AF, refer to the descriptions of FIG. 1. Repeated content is not described again.

The tag management function network element may be a (TAG Management Function, TMF) network element, which is referred to as a TMF for short. The TMF can support a tag management function, and the function supports various tag management operations. The TMF may directly communicate with the AF, or communicate with the AF through the NEF. After receiving an operation request from the AF, the TMF may perform an operation on a tag through the access network device. The TMF may also communicate with the UDM or a UDR. For example, the TMF may obtain information stored in the UDM or the UDR.

In addition, the TMF may be used as an independent network element, or may be disposed together with another network element. For example, the TMF may be disposed together with the NEF, or may be disposed together with an AMF. In this way, the NEF or the AMF can implement a function of the TMF. In addition, TMF is only an example name. All devices that can implement functions corresponding to the TMF in embodiments of this application may be understood as the TMF described in this application.

It may be understood that the foregoing network elements or functions may be network elements in a hardware device, software functions running on dedicated hardware, or virtualized functions instantiated on a platform (for example, a cloud platform). In a possible implementation method, the foregoing network elements or functions may be implemented by one device, may be implemented by a plurality of devices, or may be one functional module in one device. This is not specifically limited in embodiments of this application.

It should be noted that the communication system shown in FIG. 1 or FIG. 2 does not constitute a limitation on the communication system to which embodiments of this application are applicable. Therefore, a communication method provided in embodiments of this application is further applicable to communication systems of various standards, for example, a long term evolution (long term evolution, LTE) communication system, a 5G communication system, a 6G communication system, a future communication system, vehicle to everything (vehicle to everything, V2X), long term evolution-vehicle (LTE-vehicle, LTE-V), vehicle to vehicle (vehicle to vehicle, V2V), internet of vehicles, machine type communication (Machine Type Communications, MTC), IoT, long term evolution-machine to machine (LTE-machine to machine, LTE-M), machine to machine (machine to machine, M2M), and IoT. In addition, it should be further noted that names of network elements in the communication system are not limited in embodiments of this application. For example, in communication systems of different standards, the network elements may have other names. For another example, when a plurality of network elements are integrated into a same physical device, the physical device may also have another name.

An embodiment of this application provides an active tag, which is referred to as an active tag (Active tag) for short, that can actively communicate with an access network device. The active tag may collect data and actively report the data to the access network device. In the communication system shown in FIG. 2, the AF may request the data of the active tag from the TMF, and the access network device may forward, to the TMF, service data reported by the active tag, so that the TMF can feed back the service data of the active tag to the AF in response to the request of the AF. In such a design, there is no need to use a reader/writer to read/write the data of the tag, so that time for obtaining the service data of the tag can be shortened, thereby improving the efficiency of tag inventorying. The following further describes in detail an interaction procedure between the foregoing network elements with reference to the accompanying drawings.

FIG. 3 shows a first communication method according to an embodiment of this application. The method may be applied to a scenario in which a tag does not move, that is, a communication scenario in which the tag is in a static state. The method mainly includes the following procedure.

S301: Register a first tag with a first tag management function network element.

The first tag management function network element may be the TMF in FIG. 2, and the first tag is a terminal device within a coverage area of an access network device that establishes an N2 connection with the TMF. Specifically, the first tag may establish a communication connection with the access network device in a random access manner when determining that to-be-sent service data exists. Then, the first tag may be registered with the first tag management function network element through the access network device. For example, the first tag may send a registration request message to the first tag management function network element through the access network device, and then a tag authentication and security negotiation procedure is performed between the first tag and the first tag management function network element, to perform authentication and authorization on initial access of the first tag. Optionally, the registration request message includes an identifier of the first tag, for example, an IP address and an ID of the first tag.

It may be understood that the access network device in this embodiment of this application is a device that supports communication with an active tag.

S302: The first tag management function network element sends a first message to the first tag through the access network device.

The first message includes an identifier of the first tag management function network element, for example, information indicating the first tag management function network element, such as an IP address and an ID of the first tag management function network element. Optionally, the first message may be a registration accept message sent by the first tag management function network element in response to the registration request message of the first tag. The first message further includes information indicating the first tag to send the service data.

Optionally, the first message may further include data sending periodicity information of the first tag, specifically indicating the first tag to periodically update and send the service data based on the data sending periodicity information.

It may be understood that, after receiving the identifier of the first tag management function network element, the first tag may locally store the identifier of the first tag management function network element, for example, may store the identifier of the first tag management function network element in local storage space.

S303: The first tag sends a second message to the first tag management function network element through the access network device.

The second message includes the service data of the first tag, the identifier of the first tag, and the identifier of the first tag management function network element. Optionally, if the first message received by the first tag includes the data sending periodicity information of the first tag, the first tag may periodically send a plurality of second messages to the first tag management function network element through the access network device based on the data sending periodicity information. It may be understood that service data of the first tag included in the plurality of second messages is different, and the data sending periodicity information may alternatively be described as a service data update periodicity. In tag inventorying scenarios, the first tag management function network element may further send the service data of the first tag to another network element with tag inventorying requirements, for example, an application network element AF. Specifically, in this embodiment of this application, the another network element with tag inventorying requirements is denoted as a first network element. The first network element may initiate a request for service data of a specified tag to the first tag management function network element. Then, after receiving the service data of the specified tag, the first tag management function network element may feed back the service data of the specified tag to the first network element. For example, refer to the following S304 and S305 for implementation.

S304: The first network element sends a third message to the first tag management function network element.

The third message is used for requesting the service data of the first tag. Specifically, the third message may include the identifier of the first tag and information about the first network element. For example, the first network element is an AF, and the first tag management function network element is a TMF. In a scenario in which the TMF directly communicates with the AF, the AF may directly send the third message to the TMF; or in a scenario in which the TMF directly communicates with the AF through an NEF, the AF may send the third message to the TMF through the NEF.

It may be understood that an execution sequence of S304 and S301 to S303 is not limited in this embodiment of this application.

In a possible implementation, S304 may be performed before S301 to S303. To be specific, when the first network element requests the service data of the first tag, the first tag management function network element may complete registration of the first tag with the first tag management function network element, and send the identifier of the first tag management function network element to the first tag, so that the first tag actively sends the service data to the first tag management function network element through the access network device by using the identifier of the first tag management function network element. Specifically, after receiving the third message, the first tag management function network element may first determine, based on the information about the first network element, whether the first network element has permission to access the first tag, in other words, the first tag management function network element may determine, based on the information about the first network element, whether the first network element can obtain the service data of the first tag. For example, the information about the first network element may include an identifier of the first network element. The first tag management function network element may query subscription information of the first tag from a second network element (such as a UDM or a UDR) that stores the subscription information of the first tag, where the subscription information of the first tag includes an identifier of a network element having permission to access the first tag. If the subscription information of the first tag includes the identifier of the first network element, the first tag management function network element may determine that the first network element has permission to access the first tag. If the subscription information of the first tag does not include the identifier of the first network element, the first tag management function network element may determine that the first network element does not have permission to access the first tag.

In view of this, when the first network element has permission to access the first tag, the first tag management function network element may continue to perform steps S301 to S303 and S305 after performing S304. When the first network element does not have permission to access the first tag, the first tag management function network element does not perform steps S301 to S303 and S305.

In another possible implementation, S301 to S303 may be performed before S304. To be specific, the first tag management function network element may complete registration of the first tag with the first tag management function network element and send the identifier of the first tag management function network element to the first tag, so that the first tag actively sends the service data to the first tag management function network element through the access network device by using the identifier of the first tag management function network element. Then, after receiving the third message, the first tag management function network element may first determine, based on the information about the first network element, whether the first network element has permission to access the first tag. For example, the information about the first network element may include an identifier of the first network element. The first tag management function network element may query subscription information of the first tag from a second network element (such as a UDM or a UDR) that stores the subscription information of the first tag, where the subscription information of the first tag includes an identifier of a network element having permission to access the first tag. If the subscription information of the first tag includes the identifier of the first network element, the first tag management function network element may determine that the first network element has permission to access the first tag. If the subscription information of the first tag does not include the identifier of the first network element, the first tag management function network element may determine that the first network element does not have permission to access the first tag.

In view of this, when the first network element has permission to access the first tag, the first tag management function network element continues to perform S305 after performing S301 to S304. When the first network element does not have permission to access the first tag, the first tag management function network element does not perform step S305.

Optionally, subscription information of a first TAG includes the following content: an ID of at least one AF having permission to access the first TAG, data sending periodicity information of the first TAG, and cache policy information of service data of the first TAG in the TMF.

S305: The first tag management function network element sends the second message or a fourth message to the first network element.

In a possible implementation, the first tag management function network element may forward the second message of the first tag in real time. In other words, each time the first tag management function network element receives one second message, the first tag management function network element immediately sends the second message to the first network element.

For example, if the first message sent by the first tag management function network element in S302 includes the information indicating the first tag to send the service data, and the first message does not include the data sending periodicity information, the first tag sends the second message only once based on the first message, and the first tag management function network element feeds back the second message to the first network element when receiving one second message.

In another possible implementation, the first tag management function network element may alternatively cache a plurality of second messages, where the plurality of second messages correspond to a plurality of pieces of service data of the first tag, and then send the fourth message to the first network element, where the fourth message includes the identifier of the first tag and the plurality of pieces of service data of the first tag.

For example, if the first message sent by the first tag management function network element in S302 includes the information indicating the first tag to send the service data, and the first message includes the data sending periodicity information, the first tag periodically sends the second messages based on the first message, and the first tag management function network element may periodically receive the second messages and cache the second messages, that is, cache the plurality of second messages.

The foregoing method may be applied to a communication scenario in which a tag is a non-mobile tag. Through a design in which an identifier of a tag management network element is configured for a tag, when the tag has a service data reporting requirement, the tag may actively report service data to the tag management network element based on the identifier of the tag network element. Then, the tag management network element may forward the service data of the tag to a network element with tag inventorying requirements, thereby improving the efficiency of tag inventorying.

In addition, it may be understood that, in a possible design, the method shown in FIG. 3 may be applied to a scenario in which the first tag initially has a requirement for reporting the service data to the first tag management function network element. The first tag may store the identifier of the first tag management function network element. Therefore, in a subsequent scenario in which the first tag has the requirement for reporting the service data, the first tag may directly send the service data to the first tag management function network element after random access. For example, the first tag may include the service data in the registration request message for sending. For another example, the first tag may directly send, to the first tag management function network element based on the obtained identifier of the first tag management function network element, a message that carries the to-be-reported service data and the identifier of the first tag, by bypassing the registration process; in other words, the first tag skips the registration process and directly sends data sending information, where the data sending information carries the identifier of the first tag management function network element, and the to-be-reported service data and the identifier of the first tag. In another possible design, each time the first tag has a service data reporting requirement, implementation may be performed according to the method shown in FIG. 3.

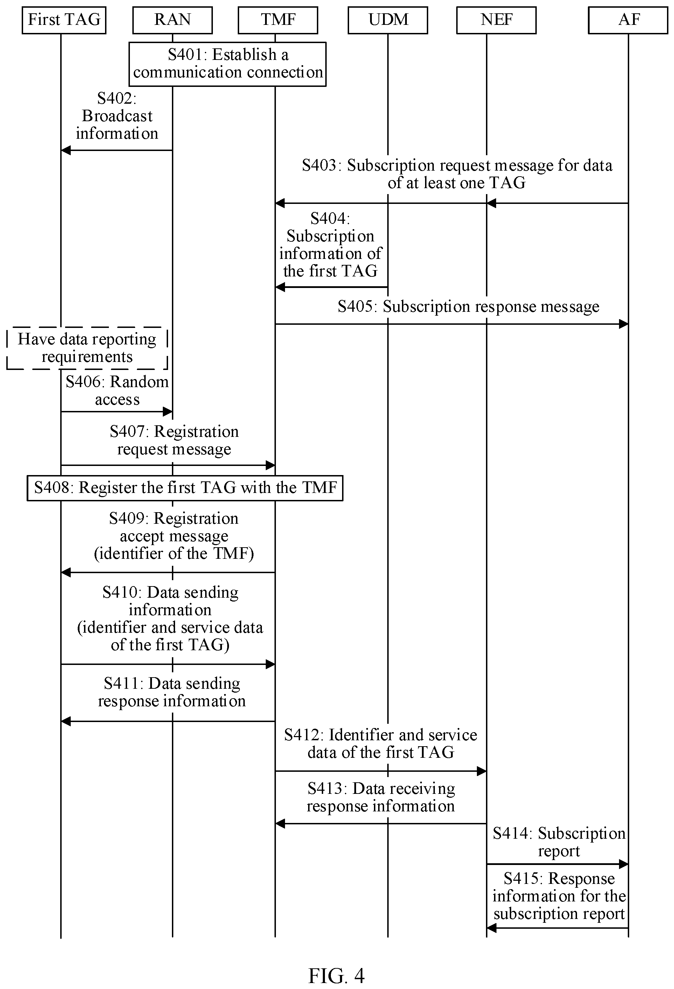

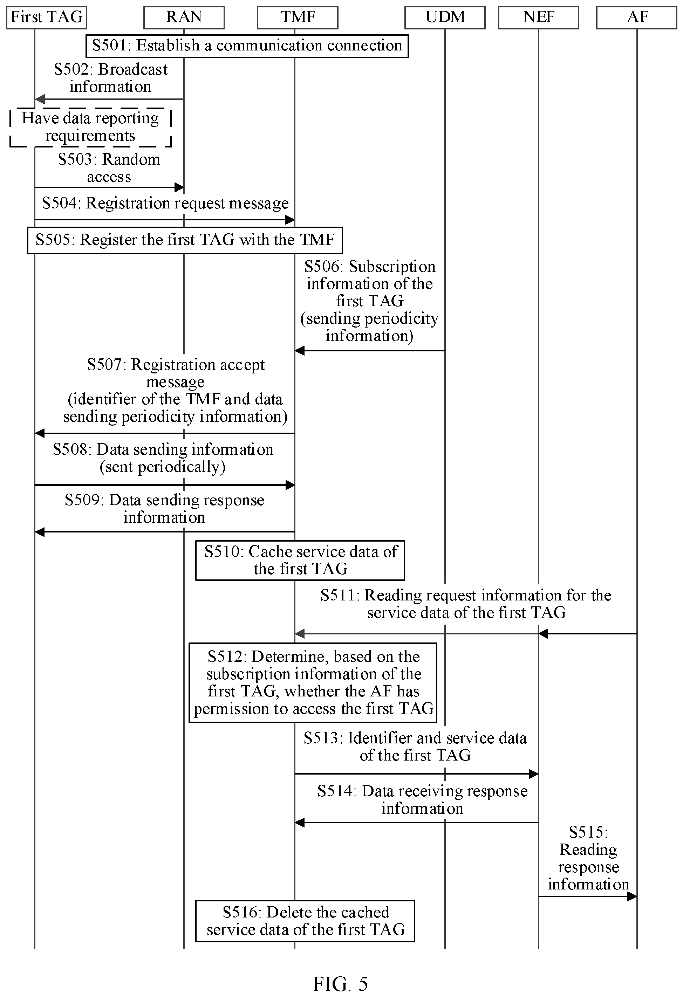

For ease of implementation, the following describes in detail a specific implementation procedure of the method in FIG. 3 by using interaction among a TAG, a RAN, a TMF, a UDM, an NEF, and an AF as an example, as shown in FIG. 4 and FIG. 5. It may be understood that the TAG in FIG. 4 and FIG. 5 is an example of the first tag, the RAN is an example of the access network device, the UDM is a network element that stores subscription information of one or more TAGs, the TMF is an example of the first tag management function network element, and the AF is an example of the first network element. The TMF indirectly communicates with the AF through the NEF.

Example 1: A communication method shown in FIG. 4 mainly includes the following steps.

S401: The RAN establishes a communication connection with the TMF.

Specifically, the RAN may send an N2 connection request message to the TMF, where the N2 connection request message includes a tag communication type supported by the RAN. For example, the tag communication type includes an active tag. Then, the TMF may establish an N2 connection with the RAN based on the N2 connection request message.

S402: The RAN sends broadcast information to a TAG within a coverage area of the RAN.

Specifically, the RAN may broadcast some random access-related configuration information to the TAG within the coverage area of the RAN, so that the TAG within the coverage area of the RAN establishes a communication connection with the RAN in a random access manner. Optionally, the TAG within the coverage area of the RAN may be considered as UE, and the RAN may periodically send over-the-air broadcast information or send over-the-air broadcast information based on event triggering.

For example, a first TAG is used as an example in FIG. 4, to show one TAG within the coverage area of the RAN.

S403: The AF sends a subscription request message for service data of at least one TAG to the TMF through the NEF.

First, the AF may send the subscription request message to the NEF. The subscription request message includes an ID of the at least one TAG. The NEF determines, based on the ID of the at least one TAG in the subscription request message, the TMF corresponding to the at least one TAG. For example, one TMF corresponds to one TAG ID group (or referred to as a TAG ID range). Optionally, IDs of a plurality of TAGs in one TAG ID group are consecutively numbered. The NEF may determine, based on the ID of the at least one TAG in the subscription request message, a TAG ID group to which the ID of the at least one TAG belongs, to determine the TMF corresponding to a first TAG ID group. Then, the NEF may send the subscription request message to the TMF.

It may be understood that the subscription request message in S403 is an example of the third message described in FIG. 3. The subscription request message may further include information about the AF, for example, an ID of the AF.

In FIG. 4, an example is described where the at least one TAG requested by the AF for subscription includes the first TAG. After receiving the subscription request message, the TMF proceeds to S404.

S404: The TMF obtains subscription information of the first TAG from the UDM.

Specifically, the TMF may send subscription information request message to the UDM based on the subscription request message. The subscription information request message includes an ID of the first TAG in the subscription request message. Then, the UDM sends the subscription information of the first TAG to the TMF. The subscription information of the first TAG includes an ID of at least one AF, and the at least one AF has permission to access the first TAG. When a plurality of AFs have permission to access the same first TAG, service data reported by the first TAG to different AFs may be the same or different. That is, different AFs may obtain the same or different service data for a same TAG.

In addition, optionally, in a scenario in which a UDR stores the subscription information of the first TAG, S404 may be replaced with that the TMF may alternatively obtain the subscription information of the first TAG from the UDR.

The TMF may determine, based on the subscription information of the first TAG, whether the AF that sends the subscription request message has permission to access the first TAG, and perform S405 when determining that the AF has the access permission. It may be understood that, if the AF that sends the subscription request message does not have permission to access the first TAG that the AF requests to subscribe to, the TMF does not perform subsequent operations.

S405: The TMF sends a subscription response message to the AF through the NEF.

Specifically, the TMF may send the subscription response message to the NEF. The subscription response message indicates that subscription succeeds. Then, the NEF sends the subscription response message to the AF or the NEF notifies the AF of the successful subscription.

In addition, the TMF may further locally store a subscription relationship between the AF and the TMF, for example, store an identifier of the first TAG that the AF subscribes to.

S406: When having a service data reporting requirement, the first TAG initiates random access to the RAN.

For example, the first TAG may initiate the random access to the RAN based on broadcast information of the RAN. For details, refer to a random access process of 5G UE. Details are not described again in this embodiment of this application.

S407: The first TAG sends a registration request message to the TMF through the RAN.

The registration request message includes the identifier of the first TAG.

S408: Register the first TAG with the TMF.

Specifically, the TMF may perform a tag authentication and security negotiation procedure corresponding to the first TAG, to perform authentication, authorization, and the like on initial access of the first TAG. Further, after the first TAG passes security verification, the TMF may continue to perform S409.

S409: The TMF sends a registration accept message to the first TAG through the RAN.

It may be understood that the registration accept message is an example of the first message in S302. Specifically, the registration accept message includes a temporary identifier and information indicating the first TAG to send service data, and the temporary identifier includes identification information such as an IP or an ID of the TMF. It may be understood that, after receiving the temporary identifier, the first TAG locally stores the temporary identifier, for example, may store the temporary identifier in local storage space.

S410: The first TAG sends service data sending information to the TMF through the RAN.

Specifically, the first TAG sends the service data sending information based on the information that is sent by the TMF and that indicates the first TAG to send the service data. It may be understood that the service data sending information is an example of the second message in S303, and the service data sending information includes the service data of the first TAG, and further includes the identifier of the first TAG and an identifier of the TMF.

S411: The TMF sends data sending response information to the first TAG through the RAN.

Specifically, after receiving the data sending response information, the TMF may perform step S412 based on the stored subscription relationship between the AF and the TMF.

S412: The TMF sends the identifier and the service data of the first TAG to the NEF.

S413: The NEF sends data receiving response information to the TMF.

The data receiving response information indicates that the NEF has received the identifier and the service data of the first TAG.

S414: The NEF sends a subscription report to the AF.

The subscription report includes the identifier and the service data of the first TAG.

S415: The AF sends response information for the subscription report to the NEF.

Further, if the first TAG has a service data reporting requirement again, steps S406 to S415 may be repeatedly performed. Details are not described again in this embodiment of this application. Optionally, when S409 is repeatedly performed, to be specific, when the TMF sends a registration accept message to the first TAG again through the RAN, the registration accept message may not repeatedly carry the identifier of the TMF.

Example 2: A communication method shown in FIG. 5 mainly includes the following steps.

S501: The RAN establishes a communication connection with the TMF.

Specifically, for understanding of this step, refer to S401. Details are not described again in this embodiment of this application.

S502: The RAN sends broadcast information to a TAG within a coverage area of the RAN.

Specifically, for understanding of this step, refer to S402. Details are not described again in this embodiment of this application.

For example, a first TAG is used as an example in FIG. 5, to show one TAG within the coverage area of the RAN.

S503: When having a service data reporting requirement, the first TAG initiates random access to the RAN.

Specifically, for understanding of this step, refer to S406. Details are not described again in this embodiment of this application.

S504: The first TAG sends a registration request message to the TMF through the RAN.

Specifically, for understanding of this step, refer to S407. Details are not described again in this embodiment of this application.

S505: Register the first TAG with the TMF.

Specifically, for understanding of this step, refer to S408. Details are not described again in this embodiment of this application.

S506: The TMF obtains subscription information of the first TAG from the UDM.

Specifically, the TMF may send a subscription information request message to the UDM. The subscription information request message is used for requesting the subscription information of the first TAG that completes registration in S505, and the subscription request message includes an ID of the first TAG. Then, the UDM may feed back the subscription information of the first TAG to the TMF. The subscription information of the first TAG includes the following content: an ID of at least one AF having permission to access the first TAG, data sending periodicity information of the first TAG, and cache policy information of service data of the first TAG in the TMF.

For example, the data sending periodicity information of the first TAG indicates the first TAG to send the service data once every specific time interval (that is, a service data sending periodicity). The cache policy information indicates a time point for caching and/or deleting the service data of the first TAG in the TMF. For example, the cache policy information indicates that the TMF caches an identifier of the first TAG and a plurality of pieces of service data from the first TAG, and after sending the plurality of pieces of service data of the TAF to the AF, the TMF deletes the plurality of pieces of service data of the first TAG that are cached in the TMF.

In addition, optionally, in a scenario in which a UDR stores the subscription information of the first TAG, S506 may be replaced with that the TMF may alternatively obtain the subscription information of the first TAG from the UDR.

S507: The TMF sends a registration accept message to the first TAG through the RAN.

It may be understood that the registration accept message is an example of the first message in S302. Specifically, the registration accept message includes a temporary identifier, information indicating the first TAG to send the service data, and the data sending periodicity information. The temporary identifier includes identification information such as an IP or an ID of the TMF, and the data sending periodicity information indicates the first TAG to periodically update and send the service data based on the data sending periodicity information. It may be understood that, after receiving the temporary identifier, the first TAG locally stores the temporary identifier, for example, may store the temporary identifier in local storage space.

S508: The first TAG periodically sends data sending information to the TMF through the RAN.

Specifically, the first TAG periodically sends the data sending information based on the data sending periodicity information in the registration accept message. In each service data sending periodicity, the first TAG performs S504 to S507, and then sends one piece of data sending information to the TMF through the RAN.

The data sending information is an example of the second message in S303. The data sending information sent by the first TAG in any periodicity includes the service data of the first TAG, and further includes the identifier of the first TAG and an identifier of the TMF. In addition, it may be understood that service data in data sending information sent by the first TAG in one periodicity is current latest service data, and service data of the first TAG in data sending information sent by the first TAG in different periodicities is different.

S509: The TMF sends data sending response information to the first TAG through the RAN.

In a possible implementation, each time the TMF receives one piece of data sending information, the TMF may send the data sending response information to the first TAG once. In another possible implementation, after receiving a plurality (for example, a preset quantity) of pieces of data sending information, the TMF may send the data sending response information to the first TAG once.

S510: The TMF caches the received service data of the first TAG.

Specifically, the TMF may cache, based on the cache policy information obtained in S506, the service data periodically sent by the first TAG.

S511: The AF sends reading request information for the service data of the first TAG to the TMF through the NEF.

First, the AF may send the reading request information to the NEF, where the reading request information includes the ID of the first TAG. The NEF determines, based on the ID of the first TAG in the reading request information, the TMF corresponding to the first TAG. For example, one TMF corresponds to one TAG ID group (or referred to as a TAG ID range), and the TAG ID group includes one or more TAG IDs. Optionally, a plurality of TAG IDs in one TAG ID group are consecutively numbered. The NEF may determine, based on the ID of the first TAG in the reading request information, a TAG ID group to which the ID of the first TAG belongs, to determine the TMF corresponding to the TAG ID group. Then, the NEF may send the reading request information to the TMF.

It may be understood that the reading request information in S403 is an example of the fourth message described in FIG. 3. The reading request information may further include information about the AF, for example, an ID of the AF.

S512: The TMF determines, based on the subscription information of the first TAG, whether the AF has permission to access the first TAG.

Specifically, if the ID of the at least one AF in the subscription information of the first TAG includes the ID of the AF carried in the reading request information, the TMF may determine that the AF has permission to access the first TAG, and continue to perform step S513. If the ID of the at least one AF in the subscription information of the first TAG does not include the ID of the AF carried in the reading request information, the TMF may determine that the AF does not have permission to access the first TAG, and not perform subsequent steps.

S513: The TMF sends the identifier and the service data of the first TAG to the NEF.

S514: The NEF sends data receiving response information to the TMF.

The data receiving response information indicates that the NEF has received the identifier and the service data of the first TAG.

S515: The NEF sends reading response information to the AF.

The reading response information includes the identifier and the service data of the first TAG.

S516: The TMF deletes the cached service data of the first TAG.

Specifically, the TMF may delete, based on the foregoing cache policy information, the plurality of pieces of cached service data of the first TAG after receiving the data receiving response information.

In addition, optionally, during specific implementation, the TMF may alternatively cache all received second messages of the first tag into the UDM (or the UDR). In other words, step S510 may be replaced with that the TMF sends the foregoing data sending information to the UDM. Operations performed by the TMF in steps S511 to S516 may be replaced with those performed by the UDM.

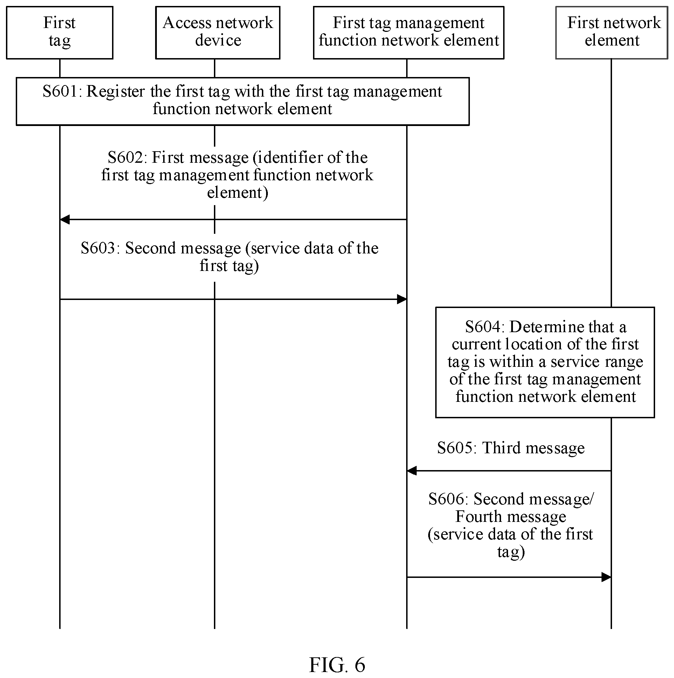

FIG. 6 shows a second communication method according to an embodiment of this application. The method may be applied to a scenario in which a tag moves, that is, a communication scenario in which the tag is in a moving state. The method mainly includes the following procedure.

S601: Register a first tag with a first tag management function network element.

For understanding of this step, refer to the descriptions of S301. Details are not described again in this embodiment of this application.

S602: The first tag management function network element sends a first message to the first tag through an access network device.

For understanding of this step, refer to the descriptions of S302. Details are not described again in this embodiment of this application.

S603: The first tag sends a second message to the first tag management function network element through the access network device.

For understanding of this step, refer to the descriptions of S303. Details are not described again in this embodiment of this application.

In tag inventorying scenarios, the first tag management function network element may further send service data of the first tag to another network element with tag inventorying requirements, for example, an application network element AF. Specifically, in this embodiment of this application, the another network element with tag inventorying requirements is denoted as a first network element. The first network element may initiate a request for service data of a specified tag to the first tag management function network element. Then, after receiving the service data of the specified tag, the first tag management function network element may feed back the service data of the specified tag to the first network element. For example, the first network element requests the service data of the first tag. Because the first tag is a tag that moves, the first network element may determine, by performing S604 and S605, to request the service data of the first tag from the first tag management function network element, and then obtain the service data of the first tag by performing S606.

S604: The first network element determines that a current location of the first tag is within a service range of the first tag management function network element.

Specifically, a second network element stores a correspondence between an identifier of the first tag and an identifier of the first tag management function network element that covers the current location of the first tag. The first network element may determine, based on the identifier of the first tag and the correspondence stored in the second network element, that the current location of the first tag is within the service range of the first tag management function network element. For example, the first tag management function network element is a first TMF, the first network element is an AF, and the second network element is a UDM (or a UDR). In a scenario in which the UDM directly communicates with the AF, the AF may directly send the identifier of the first tag to the UDM, and the UDM feeds back, to the AF, the identifier of the first tag management function network element corresponding to the first tag, so that the AF determines that the current location of the first tag is within a service range of the first TMF. Alternatively, in a scenario in which the UDM directly communicates with the AF through an NEF, the AF may send the identifier of the first tag to the UDM through the NEF, and the UDM feeds back, to the AF through the NEF, the identifier of the first tag management function network element corresponding to the first tag, so that the AF determines that the current location of the first tag is within a service range of the first TMF.

S605: The first network element sends a third message to the first tag management function network element.

The third message is used for requesting the service data of the first tag. Specifically, the third message may include the identifier of the first tag and information about the first network element. For example, the first network element is an AF, and the first tag management function network element is a first TMF. In a scenario in which the TMF directly communicates with the AF, the AF may directly send the third message to the TMF; or in a scenario in which the TMF directly communicates with the AF through an NEF, the AF may send the third message to the TMF through the NEF.

It may be understood that an execution sequence of S604 and S605, and S601 to S603 is not limited in this embodiment of this application.

For example, in a possible implementation, S604 and S605 may be performed before S601 to S603. To be specific, when the first network element requests the service data of the first tag, the first tag management function network element may complete registration of the first tag with the first tag management function network element, and send the identifier of the first tag management function network element to the first tag, so that the first tag actively sends the service data to the first tag management function network element through the access network device by using the identifier of the first tag management function network element. Specifically, after receiving the third message, the first tag management function network element may first determine, based on the information about the first network element, whether the first network element has permission to access the first tag, in other words, the first tag management function network element may determine, based on the information about the first network element, whether the first network element can obtain the service data of the first tag. For example, the information about the first network element may include an identifier of the first network element. The first tag management function network element may query subscription information of the first tag from a network element (such as a UDM or a UDR) that stores the subscription information of the first tag, where the subscription information of the first tag includes an identifier of a network element having permission to access the first tag. If the subscription information of the first tag includes the identifier of the first network element, the first tag management function network element may determine that the first network element has permission to access the first tag. Further, if the first network element has permission to access the first tag, the first tag management function network element continues to perform steps S601 to S603 and S606 after performing S604 and S605. If the first network element does not have permission to access the first tag, the first tag management function network element does not perform steps S601 to S603 and S606.

For another example, in another possible implementation, S601 to S603 may be performed before S604 and S605. To be specific, the first tag management function network element may complete registration of the first tag with the first tag management function network element and send the identifier of the first tag management function network element to the first tag, so that the first tag actively sends the service data to the first tag management function network element through the access network device by using the identifier of the first tag management function network element. Then, after receiving the third message, the first tag management function network element may first determine, based on the information about the first network element, whether the first network element has permission to access the first tag, in other words, the first tag management function network element may determine, based on the information about the first network element, whether the first network element can obtain the service data of the first tag. If the first network element has permission to access the first tag, the first tag management function network element continues to perform S606 after performing S604 and S605. If the first network element does not have permission to access the first tag, the first tag management function network element does not perform step S606.

S606: The first tag management function network element sends the second message or a fourth message to the first network element.

For understanding of this step, refer to S305. Details are not described again in this embodiment of this application.

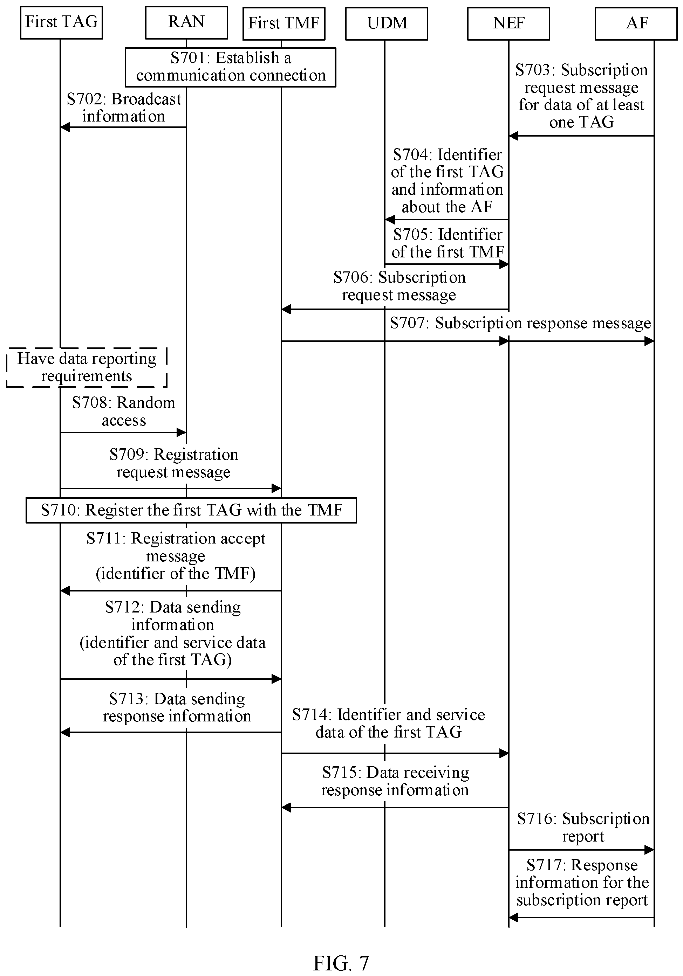

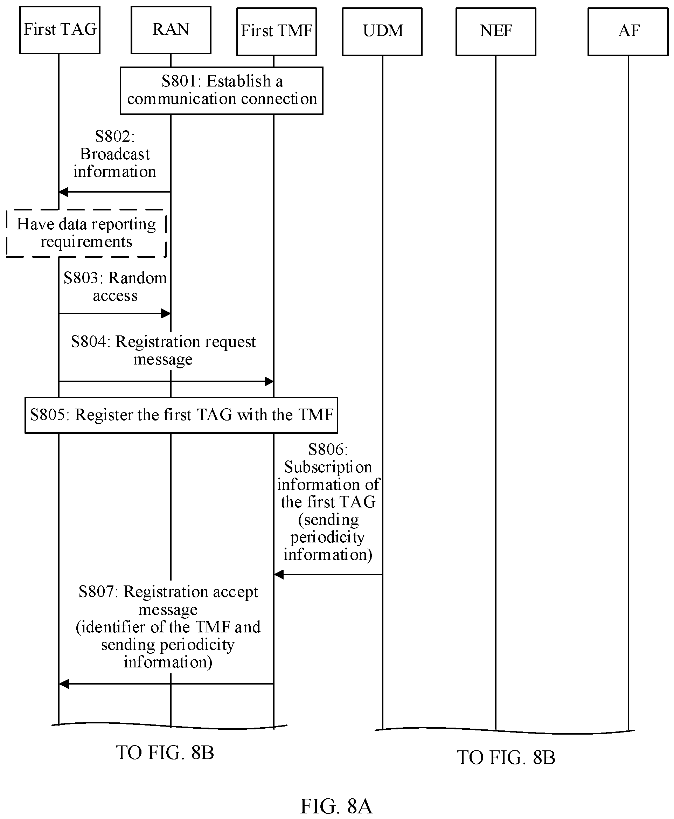

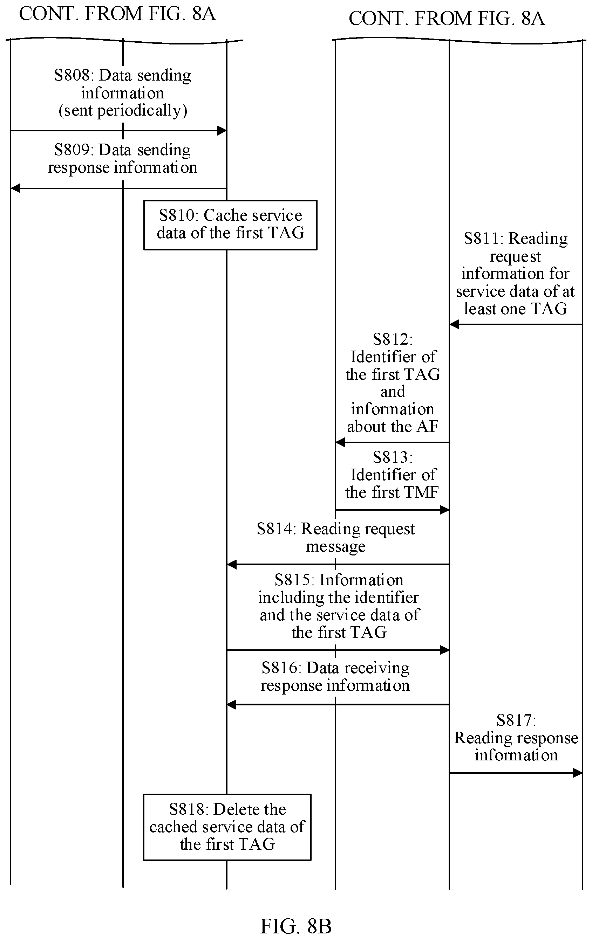

For ease of implementation, the following describes in detail a specific implementation procedure of the method in FIG. 6 by using interaction among a TAG, a RAN, a TMF, a UDM, an NEF, and an AF as an example, as shown in FIG. 7, FIG. 8A, and FIG. 8B. It may be understood that the TAG in FIG. 7, FIG. 8A, and FIG. 8B is an example of the first tag, the RAN is an example of the access network device, the UDM is a network element that stores subscription information of one or more TAGs and an association relationship between the TAG and the TMF, a first TMF is an example of the first tag management function network element, and the AF is an example of the first network element. The TMF indirectly communicates with the AF through the NEF.

Example 3: A communication method shown in FIG. 7 mainly includes the following steps.

S701: The RAN establishes a communication connection with the first TMF.

For understanding of this step, refer to S401. Details are not described again in this embodiment of this application.

S702: The RAN sends broadcast information to a TAG within a coverage area of the RAN.

For understanding of this step, refer to S402. Details are not described again in this embodiment of this application. For example, a first TAG is used as an example in FIG. 7, to show one TAG within the coverage area of the RAN.

S703: The AF sends a subscription request message for service data of at least one TAG to the NEF.

The subscription request message includes an identifier (for example, an ID) of the at least one TAG and information about the AF. It may be understood that the subscription request message in S703 is an example of the third message described in FIG. 3.

One TAG (denoted as the first TAG) in the at least one TAG is used as an example. The NEF may determine, through S704 and S705, to obtain service data of the first TAG from the first TMF.

S704: The NEF sends an identifier of the first TAG and the information about the AF to the UDM.

For example, the identifier of the first TAG may be an ID of the first TAG. The UDM may determine, based on the ID of the first TAG, a TAG ID group to which the ID of the first TAG currently belongs. One TAG ID group (or referred to as a TAG ID range) corresponds to one TMF. Optionally, IDs of a plurality of TAGs in one TAG ID group are consecutively numbered. The TAG ID group to which the ID of the first TAG currently belongs is denoted as a first TAG ID group, and the first TAG ID group corresponds to the first TMF. In this case, the UDM may determine that the service data of the first TAG may be obtained through the first TMF.

Further, the UDM may determine, based on subscription information of the first TAG, whether the AF has permission to access the first TAG, and perform S705 when determining that the AF has the access permission. For example, the subscription information of the first TAG includes an ID of at least one AF, and the at least one AF has permission to access the first TAG. Optionally, when a plurality of AFs have permission to access the same first TAG, service data reported by the first TAG to different AFs may be the same or different. That is, different AFs may obtain the same or different service data for a same TAG.

In view of this, if the subscription information of the first TAG includes an ID of the AF sent by the NEF, the UDM may continue to perform S705. If the subscription information of the first TAG does not include the ID of the AF sent by the NEF, the UDM does not perform subsequent operations.

S705: The UDM sends an identifier of the first TMF to the NEF.

This step may be understood as a response action of the UDM for S704.

S706: The NEF may send the subscription request message to the first TMF.

S707: The first TMF sends a subscription response message to the AF through the NEF.

Specifically, the first TMF may send the subscription response message to the NEF. The subscription response message indicates that subscription succeeds. Then, the NEF sends the subscription response message to the AF or the NEF notifies the AF of the successful subscription.

In addition, the first TMF may further locally store a subscription relationship between the AF and the first TMF, for example, store the identifier of the first TAG that the AF subscribes to.

S708: When having a service data reporting requirement, the first TAG initiates random access to the RAN.

For example, the first TAG may initiate the random access to the RAN based on broadcast information of the RAN. For details, refer to a random access process of 5G UE. Details are not described again in this embodiment of this application.

S709: The first TAG sends a registration request message to the first TMF through the RAN.

The registration request message includes the identifier of the first TAG.

S710: Register the first TAG with the first TMF.

Specifically, the first TMF may perform a tag authentication and security negotiation procedure corresponding to the first TAG, to perform authentication, authorization, and the like on initial access of the first TAG. Further, after the first TAG passes security verification, the first TMF may continue to perform S711.

S711: The first TMF sends a registration accept message to the first TAG through the RAN.

It may be understood that the registration accept message is an example of the first message in S302. Specifically, the registration accept message includes a temporary identifier and information indicating the first TAG to send the service data, and the temporary identifier includes identification information such as an IP or an ID of the first TMF. It may be understood that, after receiving the temporary identifier, the first TAG locally stores the temporary identifier, for example, may store the temporary identifier in local storage space.

S712: The first TAG sends data sending information to the first TMF through the RAN.

Specifically, the first TAG sends the data sending information based on the information that is sent by the first TMF and that indicates the first TAG to send the service data. It may be understood that the data sending information is an example of the second message in S303, and the data sending information includes the service data of the first TAG, and further includes the identifier of the first TAG and the identifier of the first TMF.

S713: The first TMF sends data sending response information to the first TAG through the RAN.

Specifically, after receiving the data sending response information, the first TMF may perform step S714 based on the stored subscription relationship between the AF and the first TMF.

S714: The first TMF sends, to the NEF, information including the identifier and the service data of the first TAG.

S715: The NEF sends data receiving response information to the first TMF.

The data receiving response information indicates that the NEF has received the identifier and the service data of the first TAG.

S716: The NEF sends a subscription report to the AF.

The subscription report includes the identifier and the service data of the first TAG.

S717: The AF sends response information for the subscription report to the NEF.

Further, if the first TAG has a service data reporting requirement again, steps S708 to

S717 may be repeatedly performed. Details are not described again in this embodiment of this application. Optionally, when S711 is repeatedly performed, to be specific, when the first TMF sends a registration accept message to the first TAG again through the RAN, the registration accept message may not repeatedly carry the identifier of the first TMF.

Example 4: A communication method shown in FIG. 8A and FIG. 8B mainly includes the following steps.

S801: The RAN establishes a communication connection with the first TMF.

Specifically, for understanding of this step, refer to S401. Details are not described again in this embodiment of this application.

S802: The RAN sends broadcast information to a TAG within a coverage area of the RAN.

Specifically, for understanding of this step, refer to S402. Details are not described again in this embodiment of this application.

For example, a first TAG is used as an example in FIG. 8A and FIG. 8B, to show one TAG within the coverage area of the RAN.

S803: When having a service data reporting requirement, the first TAG initiates random access to the RAN.

Specifically, for understanding of this step, refer to S406. Details are not described again in this embodiment of this application.

S804: The first TAG sends a registration request message to the first TMF through the RAN.

Specifically, a current location of the first TAG is within a service range of the first TMF. For understanding of this step, refer to S407. Details are not described again in this embodiment of this application.

S805: Register the first TAG with the first TMF.

Specifically, for understanding of this step, refer to S408. Details are not described again in this embodiment of this application.

S806: The first TMF obtains subscription information of the first TAG from the UDM.

For understanding of this step, refer to S506. Details are not described again in this embodiment of this application.

S807: The first TMF sends a registration accept message to the first TAG through the RAN.

For understanding of this step, refer to S507. Details are not described again in this embodiment of this application.

S808: The first TAG periodically sends data sending information to the first TMF through the RAN.

For understanding of this step, refer to S508. Details are not described again in this embodiment of this application.

S809: The first TMF sends data sending response information to the first TAG through the RAN.

For understanding of this step, refer to S509. Details are not described again in this embodiment of this application.

S810: The first TMF caches received service data of the first TAG.

For understanding of this step, refer to S510. Details are not described again in this embodiment of this application.

S811: The AF sends reading request information for service data of at least one TAG to the NEF.

The reading request information includes an identifier (for example, an ID) of the at least one TAG and information about the AF. It may be understood that the reading request message in S811 is an example of the third message described in FIG. 6.

One TAG (denoted as the first TAG) in the at least one TAG is used as an example. The NEF may determine, through S812 and S813, to obtain the service data of the first TAG from the first TMF.

S812: The NEF sends an identifier of the first TAG and the information about the AF to the UDM.

For example, the identifier of the first TAG may be an ID of the first TAG. The UDM may determine, based on the ID of the first TAG, a TAG ID group to which the ID of the first TAG currently belongs. One TAG ID group (or referred to as a TAG ID range) corresponds to one TMF. Optionally, IDs of a plurality of TAGs in one TAG ID group are consecutively numbered. The TAG ID group to which the ID of the first TAG currently belongs is denoted as a first TAG ID group, and the first TAG ID group corresponds to the first TMF. In this case, the UDM may determine that the service data of the first TAG may be obtained through the first TMF.

Further, the UDM may determine, based on the subscription information of the first TAG, whether the AF has permission to access the first TAG, and perform S813 when determining that the AF has the access permission. For example, the subscription information of the first TAG includes an ID of at least one AF, and the at least one AF has permission to access the first TAG. Optionally, when a plurality of AFs have permission to access the same first TAG, service data reported by the first TAG to different AFs may be the same or different. That is, different AFs may obtain the same or different service data for a same TAG.

In view of this, if the subscription information of the first TAG includes an ID of the

AF sent by the NEF, the UDM may continue to perform S813. If the subscription information of the first TAG does not include the ID of the AF sent by the NEF, the UDM does not perform subsequent operations.

S813: The UDM sends an identifier of the first TMF to the NEF.

This step may be understood as a response action of the UDM for S812.

S814: The NEF may send the reading request message to the first TMF.

S815: The first TMF sends, to the NEF, information including the identifier and the service data of the first TAG.

S816: The NEF sends data receiving response information to the first TMF.

The data receiving response information indicates that the NEF has received the identifier and the service data of the first TAG.

S817: The NEF sends reading response information to the AF.

The reading response information includes the identifier and the service data of the first TAG.

S818: The first TMF deletes the cached service data of the first TAG.

Specifically, the first TMF may delete, based on the foregoing cache policy information, the plurality of pieces of cached service data of the first TAG after receiving the data receiving response information.

Optionally, during specific implementation, the TMF may alternatively cache all received second messages of the first tag into the UDM (or a UDR). In other words, step S810 may be replaced with that the TMF sends the data sending information to the UDM. Operations performed by the TMF in steps S811 to S816 may be replaced with those performed by the UDM.

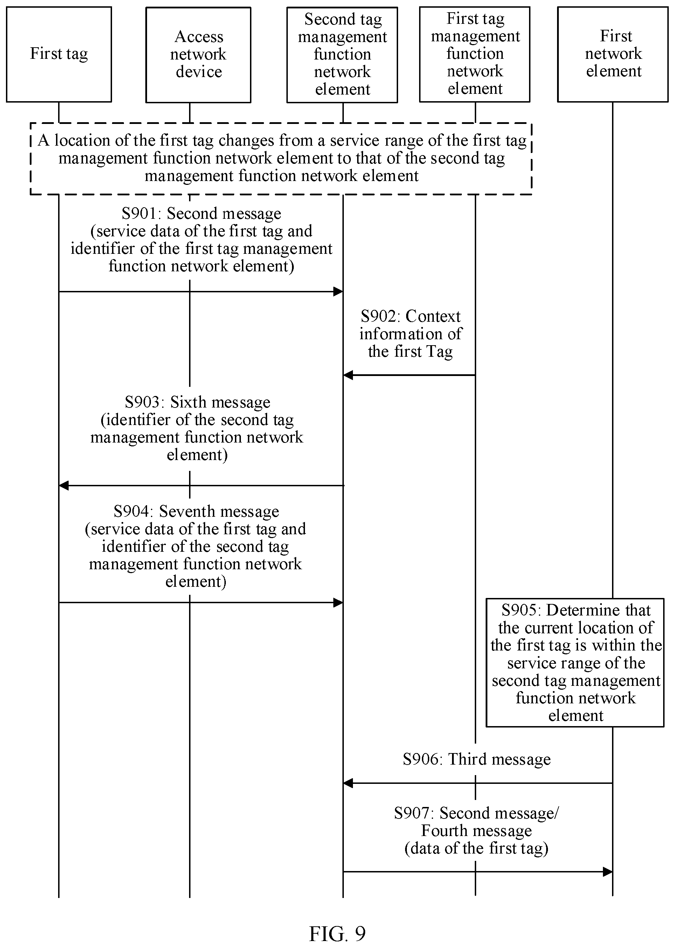

In addition, in a communication scenario in which a tag is in a moving state, a location of the tag is updated, and the location may change from a service range of a first tag management function network element to a service range of a second tag management function network element. In this case, for understanding of a solution in which the tag actively reports service data, refer to a third communication method shown in FIG. 9. The method mainly includes the following steps.

S901: When a location of a first tag changes from the service range of the first tag management function network element to the service range of the second tag management function network element, the first tag sends a second message to the second tag management function network element through an access network device.

The first tag is a tag registered with the first tag management function network element, and the second message includes service data of the first tag and an identifier of the first tag management function network element. Specifically, the first tag may determine the to-be-sent service data, and establish a communication connection with the access network device in a random access manner. Then, the first tag may send the second message to the second tag management function network element through the access network device.

S902: The second tag management function network element obtains, based on the second message, context information of the first tag from the first tag management function network element.

Specifically, the second tag management function network element requests the context information of the first tag from the first tag management function network element based on the identifier of the first tag management function network element in the second message, and then the first tag management function network element sends the context information of the first tag to the second tag management function network element. The context information of the first tag may include information related to registration of the first tag with the first tag management function network element, historical service data of the first tag, and the like. The second tag management function network element may store the context information of the first tag, and complete switching of the first tag from the first tag management function network element to the second tag management function network element, that is, complete registration of the first tag with the second tag management function network element. Further, the second tag management function network element may further send, to a second network element (for example, a UDM/UDR), information indicating that the first tag is registered with the second tag management function network element. The information includes an identifier of the second tag management function network element and an identifier of the first tag. There is an association relationship between the identifier of the second tag management function network element and the identifier of the first tag.

In addition, optionally, a timer may be configured, and timing starts after the first tag management function network element sends the context information of the first tag to the second tag management function network element. Upon timeout of the timer, the first tag management function network element deletes the context information of the first tag; or after receiving the information indicating that the first tag is registered with the second tag management function network element, the second network element sends a message to the first tag management function network element, to indicate the first tag management function network element to delete the context information of the first tag.

S903: The second tag management function network element sends a sixth message to the first tag through the access network device.

The sixth message includes the identifier of the second tag management function network element.

S904: The first tag sends a seventh message to the second tag management function network element through the access network device.

The seventh message includes the service data of the first tag and the identifier of the second tag management function network element.

In tag inventorying scenarios, the second tag management function network element may further send the service data of the first tag to another network element with tag inventorying requirements, for example, an application network element AF. Specifically, in this embodiment of this application, the another network element with tag inventorying requirements is denoted as a first network element. The first network element may initiate a request for service data of a specified tag to the second tag management function network element. Then, after receiving the service data of the specified tag, the second tag management function network element may feed back the service data of the specified tag to the first network element. For example, the first network element requests the service data of the first tag. Because the first tag is a tag that moves, the first network element may determine, by performing S905 and S906, to request the service data of the first tag from the second tag management function network element, and then obtain the service data of the first tag by performing S907.

S905: The first network element determines that a current location of the first tag is within the service range of the second tag management function network element.

Specifically, the second network element stores a correspondence between the identifier of the first tag and the identifier of the second tag management function network element that covers the current location of the first tag. The first network element may determine, based on the identifier of the first tag and the correspondence stored in the second network element, that the current location of the first tag is within the service range of the second tag management function network element. For example, the second tag management function network element is a first TMF, the first network element is an AF, and the second network element is the UDM (or the UDR). In a scenario in which the UDM directly communicates with the AF, the AF may directly send the identifier of the first tag to the UDM, and the UDM feeds back, to the AF, the identifier of the second tag management function network element corresponding to the first tag, so that the AF determines that the current location of the first tag is within a service range of the first TMF. Alternatively, in a scenario in which the UDM directly communicates with the AF through an NEF, the AF may send the identifier of the first tag to the UDM through the NEF, and the UDM feeds back, to the AF through the NEF, the identifier of the second tag management function network element corresponding to the first tag, so that the AF determines that the current location of the first tag is within a service range of the first TMF.

S906: The first network element sends a third message to the second tag management function network element.

The third message is used for requesting the service data of the first tag. Specifically, the third message may include the identifier of the first tag and information about the first network element. For example, the first network element is an AF, and the second tag management function network element is a first TMF. In a scenario in which the TMF directly communicates with the AF, the AF may directly send the third message to the TMF; or in a scenario in which the TMF directly communicates with the AF through an NEF, the AF may send the third message to the TMF through the NEF.

It may be understood that an execution sequence of S905 and S906, and S901 to S904 is not limited in this embodiment of this application.

For example, in a possible implementation, S905 and S906 may be performed before S901 to S904. To be specific, when the first network element requests the service data of the first tag, the second tag management function network element may complete the registration of the first tag with the second tag management function network element, and send the identifier of the second tag management function network element to the first tag, so that the first tag actively sends the service data to the second tag management function network element through the access network device by using the identifier of the second tag management function network element. Specifically, after receiving the third message, the second tag management function network element may first determine, based on the information about the first network element, whether the first network element has permission to access the first tag, in other words, the second tag management function network element may determine, based on the information about the first network element, whether the first network element can obtain the service data of the first tag. For example, the information about the first network element may include an identifier of the first network element. The second tag management function network element may query subscription information of the first tag from a network element (such as a UDM or a UDR) that stores the subscription information of the first tag, where the subscription information of the first tag includes an identifier of a network element having permission to access the first tag. If the subscription information of the first tag includes the identifier of the first network element, the second tag management function network element may determine that the first network element has permission to access the first tag. Further, if the first network element has permission to access the first tag, the second tag management function network element continues to perform steps S901 to S904 and S907 after performing S905 and S906. If the first network element does not have permission to access the first tag, the second tag management function network element does not perform steps S901 to S904 and S907.

For another example, in another possible implementation, S901 to S904 may be performed before S905 and S906. To be specific, the second tag management function network element may complete registration of the first tag with the second tag management function network element and send the identifier of the second tag management function network element to the first tag, so that the first tag actively sends the service data to the second tag management function network element through the access network device by using the identifier of the second tag management function network element. Then, after receiving the third message, the second tag management function network element may first determine, based on the information about the first network element, whether the first network element has permission to access the first tag, in other words, the second tag management function network element may determine, based on the information about the first network element, whether the first network element can obtain the service data of the first tag. If the first network element has permission to access the first tag, the second tag management function network element continues to perform S907 after performing S905 and S906. If the first network element does not have permission to access the first tag, the second tag management function network element does not perform step S907.

S907: The second tag management function network element sends the second message or a fourth message to the first network element.

For understanding of this step, refer to S305. Details are not described again in this embodiment of this application.

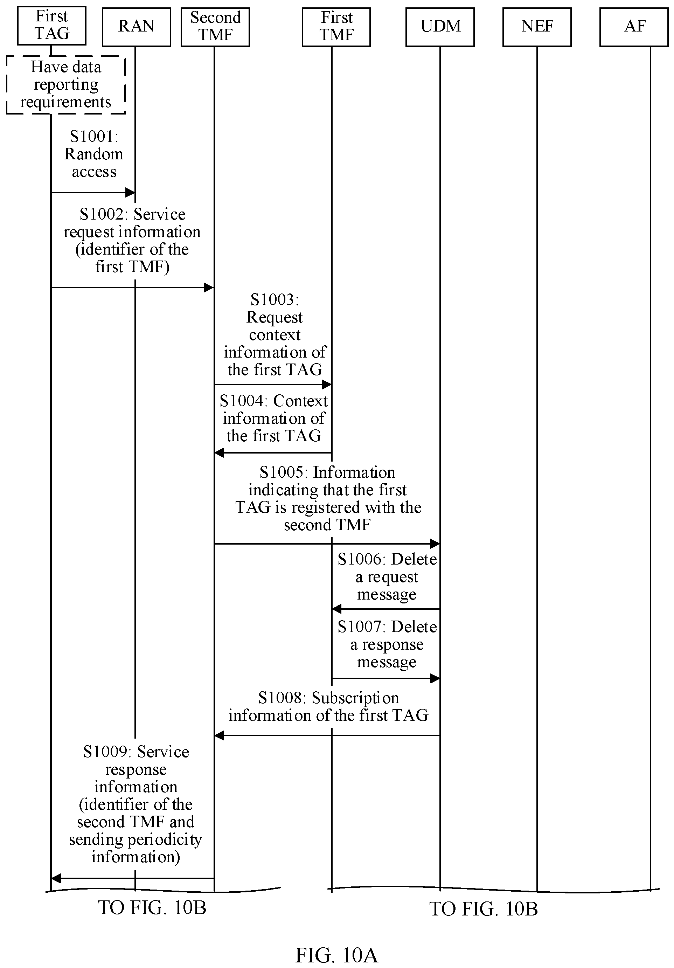

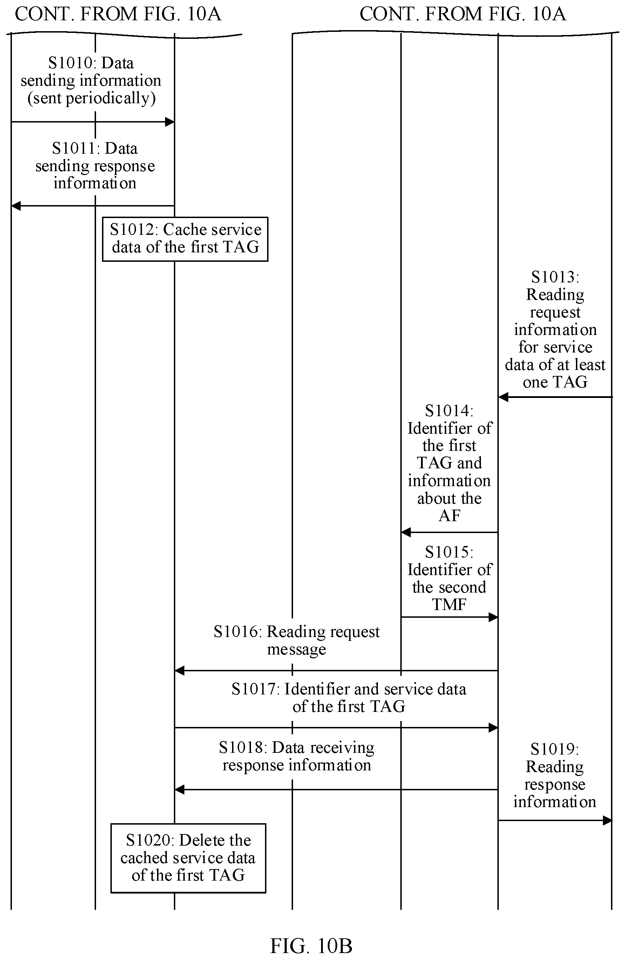

For ease of implementation, the following describes in detail a specific implementation procedure of the method in FIG. 9 by using interaction among a TAG, a RAN, a TMF, a UDM, an NEF, and an AF as an example, as shown in FIG. 10A and FIG. 10B. It may be understood that, in FIG. 10A and FIG. 10B, a first TAG is an example of a first tag, the RAN is an example of an access network device, a first TMF is an example of a first tag management function network element, a second TMF is an example of a second tag management function network element, the UDM (or a UDR) is an example of a second network element, where the UDM stores subscription information of one or more TAGs and an association relationship between the TAG and the TMF, and the AF is an example of a first network element. The TMF indirectly communicates with the AF through the NEF.

Example 5: A communication method shown in FIG. 10A and FIG. 10B mainly includes the following steps.

S1001: When having a service data reporting requirement, the first TAG initiates random access to the RAN.

The first TAG is a TAG registered with the first TMF, and the first TAG stores an identifier of the first TMF. For example, the first TAG may initiate the random access to the RAN based on broadcast information of the RAN. For details, refer to a random access process of 5G UE. Details are not described again in this embodiment of this application.

When a location of the first TAG changes from a service range of the first TMF to a service range of the second TMF, the first TAG may continue to perform S1002.

S1002: The first TAG sends service request information to the second TMF through the RAN.

It may be understood that the service request information is an example of the second message in S901, and the service request information includes service data of the first TAG, and further includes an identifier of the first TAG and the identifier of the first TMF.

S1003: The second TMF requests context information of the first TAG from the first TMF based on the identifier of the first TMF.

S1004: The first TMF sends the context information of the first TAG to the second TMF.

S1005: The second TMF sends, to the UDM, information indicating that the first TAG is registered with the second TMF.

Specifically, for understanding of this step, refer to the descriptions in S902. Details are not described again in this embodiment of this application. Optionally, the UDM may be replaced with the UDR.

S1006: The UDM sends a deletion request message for the context information of the first TAG to the first TMF.

S1007: The first TMF sends a deletion response message for the context information of the first TAG to the UDM.

Specifically, after deleting the context information of the first TAG, the first TMF sends the deletion response message.

S1008: The UDM sends subscription information of the first TAG to the second TMF.

The subscription information of the first TAG includes the following content: an ID of at least one AF having permission to access the first TAG, data sending periodicity information of the first TAG, and cache policy information of the service data of the first TAG in the TMF.

S1009: The second TMF sends service response information to the first TAG through the RAN.

Specifically, the service response information includes a temporary identifier, information indicating the first TAG to send the service data, and the data sending periodicity information. The temporary identifier includes identification information such as an IP or an ID of the second TMF, and the data sending periodicity information indicates the first TAG to periodically update and send the service data based on the data sending periodicity information. It may be understood that, after receiving the temporary identifier, the first TAG locally stores the temporary identifier, for example, may store the temporary identifier in local storage space.

S1010: The first TAG periodically sends data sending information to the second TMF through the RAN.

For understanding of this step, refer to S508. Details are not described again in this embodiment of this application.

S1011: The second TMF sends data sending response information to the first TAG through the RAN.

For understanding of this step, refer to S509. Details are not described again in this embodiment of this application.

S1012: The second TMF caches the received service data of the first TAG.

For understanding of this step, refer to S510. Details are not described again in this embodiment of this application.

S1013: The AF sends reading request information for service data of at least one TAG to the NEF.

The reading request information includes an identifier (for example, an ID) of the at least one TAG and information about the AF. It may be understood that the reading request message in S1013 is an example of the third message described in FIG. 9.

One TAG (denoted as the first TAG) in the at least one TAG is used as an example. The NEF may determine, through S1014 and S1015, to obtain the service data of the first TAG from the second TMF.

S1014: The NEF sends the identifier of the first TAG and the information about the AF to the UDM.

For understanding of this step, refer to S812. Details are not described again in this embodiment of this application.

S1015: The UDM sends an identifier of the second TMF to the NEF.

This step may be understood as a response action of the UDM for S1013.

S1016: The NEF may send the reading request message to the second TMF.

S1017: The second TMF sends, to the NEF, information including the identifier and the service data of the first TAG.

S1018: The NEF sends data receiving response information to the second TMF.

The data receiving response information indicates that the NEF has received the identifier and the service data of the first TAG.

S1019: The NEF sends reading response information to the AF.

The reading response information includes the identifier and the service data of the first TAG.

S1020: The second TMF deletes the cached service data of the first TAG.

Specifically, the second TMF may delete, based on the foregoing cache policy information, the plurality of pieces of cached service data of the first TAG after receiving the data receiving response information.

In addition, optionally, during specific implementation, the second TMF may alternatively cache all received second messages of the first TAG into the UDM (or the UDR). In other words, step S1012 may be replaced with that the TMF sends the data sending information to the UDM. Operations performed by the second TMF in steps S1013 to S1020 may be replaced with those performed by the UDM.

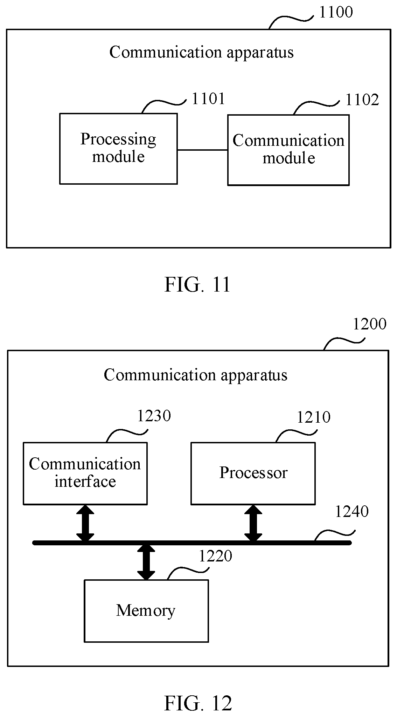

Based on a same concept, refer to FIG. 11. An embodiment of this application provides a communication apparatus 1100. The communication apparatus 1100 includes a processing module 1101 and a communication module 1102. The communication apparatus 1100 may be a first tag, or a communication apparatus used in the first tag or used in conjunction with the first tag for implementing a communication method performed on a first tag side. Alternatively, the communication apparatus 1100 may be an access network device, or a communication apparatus used in the access network device or used in conjunction with the access network device for implementing a communication method performed on an access network device side. Alternatively, the communication apparatus 1100 may be a core network element (for example, a first tag management function network element, a first network element, a second network element, or a second tag management function network element), or a communication apparatus used in the core network element or used in conjunction with the core network element for implementing a communication method performed on a core network element side.

The module may also be referred to as a transceiver module, a transceiver, a transceiver machine, a transceiver apparatus, or the like. The processing module may also be referred to as a processor, a processing board, a processing unit, a processing apparatus, or the like. Optionally, the communication module is configured to perform a sending operation and a receiving operation on the first tag side or the access network device side in the foregoing method. A component configured to implement a receiving function in the communication module may be considered as a receiving unit, and a component configured to implement a sending function in the communication module may be considered as a sending unit. In other words, the communication module includes the receiving unit and the sending unit.

When the communication apparatus 1100 is used in the first tag, the processing module 1101 may be configured to implement a processing function of the first tag in any one of the examples in FIG. 3 to FIG. 10B, and the communication module 1102 may be configured to implement a receiving and sending function of the first tag in any one of the examples in FIG. 3 to FIG. 10B.

When the communication apparatus 1100 is used in the access network device, the processing module 1101 may be configured to implement a processing function of the access network device in any one of the examples in FIG. 3 to FIG. 10B, and the communication module 1102 may be configured to implement a receiving and sending function of the access network device in any one of the examples in FIG. 3 to FIG. 10B.

When the communication apparatus 1100 is used on the core network element side, the processing module 1101 may be configured to implement a processing function of the core network element in any one of the examples in FIG. 3 to FIG. 10B, and the communication module 1102 may be configured to implement a receiving and sending function of the core network element in any one of the examples in FIG. 3 to FIG. 10B.

In addition, it should be noted that, in a possible design, the communication module and/or the processing module may be implemented by using a virtual module. For example, the processing module may be implemented by using a software functional unit or a virtual apparatus, and the communication module may be implemented by using a software function or a virtual apparatus. In another possible design, the processing module or the communication module may alternatively be implemented by using a physical apparatus. For example, if the apparatus is implemented by using a chip/chip circuit, the communication module may be an input/output circuit and/or a communication interface, and performs an input operation (corresponding to the receiving operation) and an output operation (corresponding to the sending operation). The processing module is an integrated processor, a microprocessor, or an integrated circuit.

In this embodiment of this application, module division is an example, and is merely a logical function division. In actual implementation, another division manner may be used. In addition, functional modules in the examples in embodiments of this application may be integrated into one processor, or each of the modules may exist alone physically, or two or more modules are integrated into one module. The integrated module may be implemented in a form of hardware, or may be implemented in a form of a software functional module.

Based on a same technical concept, an embodiment of this application further provides a communication apparatus 1200. For example, the communication apparatus 1200 may be a chip or a chip system. Optionally, in this embodiment of this application, the chip system may include a chip, or may include a chip and another discrete device.

The communication apparatus 1200 may be configured to implement a function of any network element in the communication system described in the foregoing examples. The communication apparatus 1200 may include at least one processor 1210. Optionally, the processor 1210 is coupled to a memory. The memory may be located in the apparatus, the memory may be integrated with the processor, or the memory may be located outside the apparatus. For example, the communication apparatus 1200 may further include at least one memory 1220. The memory 1220 stores a computer program, a computer program or instructions, and/or data necessary for implementing any one of the foregoing examples. The processor 1210 may execute the computer program stored in the memory 1220, to complete the method in any one of the foregoing examples.

The communication apparatus 1200 may further include a communication interface 1230, and the communication apparatus 1200 may exchange information with another device through the communication interface 1230. For example, the communication interface 1230 may be a transceiver, a circuit, a bus, a module, a pin, or a communication interface of another type. When the communication apparatus 1200 is a chip-type apparatus or circuit, the communication interface 1230 in the apparatus 1200 may alternatively be an input/output circuit, and may input information (or referred to as receiving information) and output information (or referred to as sending information). The processor is an integrated processor, a microprocessor, an integrated circuit, or a logic circuit. The processor may determine output information based on input information.

The coupling in this embodiment of this application may be an indirect coupling or a communication connection between apparatuses, units, or modules in an electrical form, a mechanical form, or another form, and is used for information exchange between the apparatuses, the units, or the modules. The processor 1210 may operate cooperatively with the memory 1220 and the communication interface 1230. A specific connection medium between the processor 1210, the memory 1220, and the communication interface 1230 is not limited in this embodiment of this application.

Optionally, refer to FIG. 12. The processor 1210, the memory 1220, and the communication interface 1230 are connected to each other through a bus 1240. The bus 1240 may be a peripheral component interconnect (peripheral component interconnect, PCI) bus, an extended industry standard architecture (extended industry standard architecture, EISA) bus, or the like. The bus may be classified into an address bus, a data bus, a control bus, and the like. For ease of representation, only one bold line indicates the bus in FIG. 12, but this does not mean that there is only one bus or only one type of bus.

In embodiments of this application, the processor may be a general-purpose processor, a digital signal processor, an application-specific integrated circuit, a field programmable gate array or another programmable logic device, a discrete gate or transistor logic device, or a discrete hardware component, and may implement or perform the methods, steps, and logical block diagrams in embodiments of this application. The general purpose processor may be a microprocessor or any conventional processor or the like. The steps of the method in embodiments of this application may be directly completed by a hardware processor, or may be completed by using a combination of hardware in the processor and a software module.

In embodiments of this application, the memory may be a non-volatile memory, such as a hard disk drive (hard disk drive, HDD) or a solid-state drive (solid-state drive, SSD), or may be a volatile memory (volatile memory), such as a random access memory (random access memory, RAM). The memory is any other medium that can carry or store expected program code in a form of an instruction or a data structure and that can be accessed by a computer, but is not limited thereto. The memory in embodiments of this application may alternatively be a circuit or any other apparatus that can implement a storage function, and is configured to store the program instructions and/or the data.

In a possible implementation, the communication apparatus 1200 may be used in a first tag. Specifically, the communication apparatus 1200 may be the first tag, or may be an apparatus that can support the first tag in implementing a function of the first tag in any one of the foregoing examples. The memory 1220 stores a computer program (or instructions) and/or data for implementing a function of the first tag in any one of the foregoing examples. The processor 1210 may execute the computer program stored in the memory 1220, to complete the method performed by the first tag in any one of the foregoing examples. For example, when the communication apparatus is used in the first tag, the communication interface in the communication apparatus 1200 may be configured to interact with an access network device, and send information to the access network device or receive information from the access network device.

In a possible implementation, the communication apparatus 1200 may be used in a core network element. Specifically, the communication apparatus 1200 may be the core network element, or may be an apparatus that can support the core network element in implementing functions of the core network element in any one of the foregoing examples. The memory 1220 stores a computer program (or instructions) and/or data for implementing a function of the core network element in any one of the foregoing examples. The processor 1210 may execute the computer program stored in the memory 1220, to complete the method performed by the core network element in any one of the foregoing examples. For example, when the communication apparatus is used in the core network element, the communication interface in the communication apparatus 1200 may be configured to interact with another network element or access network device, for example, send information to the another network element or access network device, or receive information from the another network element or access network device.

In another possible implementation, the communication apparatus 1200 may be used in an access network device. Specifically, the communication apparatus 1200 may be the access network device, or may be an apparatus that can support the access network device in implementing functions of the access network device in any one of the foregoing examples. The memory 1220 stores a computer program (or instructions) and/or data for implementing a function of the access network device in any one of the foregoing examples. The processor 1210 may execute the computer program stored in the memory 1220, to complete the method performed by the access network device in any one of the foregoing examples. For example, when the communication apparatus is used in the access network device, the communication interface in the communication apparatus 1200 may be configured to interact with the first tag or the core network element, for example, send information to the core network element or the first tag, or receive information from the core network element or the first tag.

The communication apparatus 1200 provided in this example may be used in the access network device to complete the method performed on the access network device side, or used in the first tag to complete the method performed by the first tag, or used in the core network element to complete the method performed by the core network element. Therefore, for technical effect that can be achieved by the communication apparatus 1200, refer to the foregoing method examples. Details are not described herein again.

The technical solutions provided in this embodiment of this application may be fully or partially implemented through software, hardware, firmware, or any combination thereof. When software is used to implement the embodiments, all or a part of the embodiments may be implemented in a form of a computer program product. The computer program product includes one or more computer instructions. When the computer program instructions are loaded and executed on the computer, the procedure or functions according to embodiments of this application are all or partially generated. The computer may be a general-purpose computer, a special-purpose computer, a computer network, a terminal device, an access network device, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by the computer or a data storage device, for example, a server or a data center, integrating one or more usable media. The usable medium may be a magnetic medium (for example, a floppy disk, a hard disk drive, or a magnetic tape), an optical medium (for example, a digital video disc (digital video disc, DVD)), a semiconductor medium, or the like.

In embodiments of this application, on the premise that there is no logical contradiction, the examples may be mutually referenced. For example, the methods and/or the terms in the method embodiments may be mutually referenced. For example, the functions and/or the terms in apparatus embodiments may be mutually referenced. For example, the functions and/or the terms between the apparatus example and the method example may be mutually referenced.

Apparently, a person skilled in the art may make various modifications and variations to embodiments of this application without departing from the scope of embodiments of this application. In this way, embodiments of this application are also intended to cover these modifications and variations provided that they fall within the scope of the claims of embodiments of this application and equivalent technologies thereof.

## Claims

1. A communication method, applied to a first tag management function network element, and comprising:
sending a first message to a first tag through an access network device, wherein the first message comprises an identifier of the first tag management function network element, and the first tag is a tag registered with the first tag management function network element; and
receiving a second message from the first tag through the access network device, wherein the second message comprises service data of the first tag, an identifier of the first tag, and the identifier of the first tag management function network element.

2. The method according to claim 1, wherein the first message further comprises information indicating the first tag to send the service data.

3. The method according to claim 1 or 2, wherein before sending the first message to the first tag through the access network device, the method further comprises:
receiving a third message from a first network element, wherein the third message is used for requesting the service data of the first tag, the third message comprises the identifier of the first tag and information about the first network element, and the information about the first network element is used for determining that the first network element has permission to access the first tag; and
after receiving the second message from the first tag through the access network device, the method further comprises:
sending the second message of the first tag to the first network element.

4. The method according to claim 1 or 2, wherein the first message further comprises data sending periodicity information of the first tag; and the receiving the second message from the first tag through the access network device comprises:
receiving a plurality of second messages from the first tag through the access network device based on the data sending periodicity information of the first tag.

5. The method according to claim 4, wherein after receiving the plurality of second messages from the first tag through the access network device, the method further comprises:
receiving a third message from the first network element, wherein the third message is used for requesting the service data of the first tag, the third message comprises the identifier of the first tag and information about the first network element, and the information about the first network element is used for determining that the first network element has permission to access the first tag; and
sending a fourth message to the first network element, wherein the fourth message comprises the identifier of the first tag and the service data of the first tag from the plurality of second messages.

6. The method according to any one of claims 3 to 5, wherein before receiving the second message from the first tag through the access network device, the method further comprises:
obtaining subscription information of the first tag from a second network element, wherein the subscription information of the first tag comprises one or more of the following:
access permission information corresponding to the first tag, wherein the access permission information indicates a network element having permission to access the first tag;
the data sending periodicity information of the first tag; and
service data cache information of the first tag, wherein the data cache information indicates a time point for caching and/or deleting the service data of the first tag in the first tag management function network element.

7. The method according to claim 6, wherein before obtaining the subscription information of the first tag from the second network element, the method further comprises:
sending a fifth message to the second network element, wherein the fifth message indicates a mapping relationship between the first tag and the first tag management function network element.

8. A communication method, applied to a first tag, and comprising:
after completion of registration with a first tag management function network element, receiving a first message from the first tag management function network element through an access network device, wherein the first message comprises an identifier of the first tag management function network element; and
sending a second message to the access network device through the access network device, wherein the second message comprises service data of the first tag, an identifier of the first tag, and the identifier of the first tag management function network element.

9. The method according to claim 8, further comprising:
determining to-be-sent data, and establishing a communication connection with the access network device in a random access manner; and
registering the first tag with the first tag management function network element through the access network device.

10. The method according to claim 8 or 9, wherein the first message further comprises information indicating the first tag to send data.

11. The method according to any one of claims 8 to 10, wherein the first message further comprises data sending periodicity information of the first tag; and the sending the second message to the first tag management function network element through the access network device comprises:
sending a plurality of second messages through the access network device based on the data sending periodicity information of the first tag.

12. A communication method, applied to a first network element, and comprising:
determining that a current location of a first tag is within a service range of a first tag management function network element;
sending a third message to the first tag management function network element, wherein the third message is used for requesting service data of the first tag, the third message comprises an identifier of the first tag and information about the first tag management function network element, and the information about the first tag management function network element is used for determining that the first tag management function network element has permission to access the first tag; and
receiving one or more second messages of the first tag from the first tag management function network element, wherein the second message comprises the service data of the first tag, the identifier of the first tag, and an identifier of the first tag management function network element.

13. A communication method, applied to a first tag, wherein the first tag is a tag registered with a first tag management function network element, and the method comprises:
when a location of the first tag changes from a service range of the first tag management function network element to a service range of a second tag management function network element, sending a second message to the second tag management function network element through an access network device, wherein the second message comprises service data of the first tag and an identifier of the first tag management function network element;
receiving a sixth message from the second tag management function network element through the access network device, wherein the sixth message comprises an identifier of the second tag management function network element; and
sending a seventh message to the second tag management function network element through the access network device, wherein the seventh message comprises the service data of the first tag and the identifier of the second tag management function network element.

14. The method according to claim 13, wherein the sending the second message to the second tag management function network element through the access network device comprises:
determining to-be-sent data, and establishing a communication connection with the access network device in a random access manner; and
sending the second message to the second tag management function network element through the access network device.

15. A communication method, applied to a second tag management function network element, and comprising:
receiving a second message from a first tag through an access network device, wherein the second message comprises service data of the first tag and an identifier of a first tag management function network element, and the first tag is a tag registered with the first tag management function network element;
obtaining, based on the identifier of the first tag management function network element, context information of the first tag from the first tag management function network element;
sending a sixth message to the first tag through the access network device, wherein the sixth message comprises an identifier of the second tag management function network element; and
receiving a seventh message from the first tag through the access network device, wherein the seventh message comprises the service data of the first tag and the identifier of the second tag management function network element.

16. A communication apparatus, comprising a module configured to perform the method according to any one of claims 1 to 15.

17. A communication apparatus, comprising:
a processor, wherein the processor is coupled to a memory, the memory is configured to store a computer program or instructions, and the processor is configured to execute the computer program or the instructions, to implement the method according to any one of claims 1 to 15.

18. A computer-readable storage medium, wherein the computer-readable storage medium stores a computer program or instructions, and when the instructions are run on a computer, the method according to any one of claims 1 to 15 is implemented.

19. A computing program product, comprising computer-executable instructions, wherein when the computer-executable instructions are run on a computer, the computer is caused to perform the method according to any one of claims 1 to 15.
